# EUROPÄISCHE PATENTSCHRIFT

(11) **EP 3 324 501 B1**
(45) Veröffentlichungstag und Bekanntmachung des Hinweises auf die Patenterteilung: **29.04.2020**
(21) Anmeldenummer: 17205845.5
(22) Anmeldetag: 14.03.2014
(51) Int. Cl.: H02G 1/06

(54) **AKTIVE KÜHLUNG VON KABELN MIT GASFÖRMIGEN ODER FLÜSSIGEN KÜHLMEDIEN**
ACTIVE COOLING OF CABLES WITH GASEOUS OR LIQUID COOLING MEDIA
REFROIDISSEMENT ACTIF DE CÂBLES AU MOYEN D'AGENTS DE REFROIDISSEMENT GAZEUX OU FLUIDES

(30) Priorität: 14.03.2013 DE 102013102631
(43) Veröffentlichungstag der Anmeldung: 23.05.2018
(62) Teilanmeldung aus: 14159929.0
(73) Patentinhaber: Spiegel, Werner, 42897 Remscheid (DE)
(72) Erfinder: Spiegel, Werner, 42897 Remscheid (DE)
(74) Vertreter: Ring & Weisbrodt

(56) Entgegenhaltungen:
- DE-A1- 1 959 738
- GB-A- 2 122 367
- GB-A- 2 229 549
- JP-A- S54 101 199
- JP-A- 2000 166 043
- JP-A- 2002 271 934
- US-A1- 2007 077 125

## Beschreibung

Die vorliegende Erfindung betrifft ein Verfahren zur aktiven Kühlung von Kabeln mit gasförmigen oder flüssigen Kühlmedien, bei dem die Kabel auftriebsgestützt montiert oder verlegt sind.

Technologisch und aus physikalischen Gründen besteht in der Regel der Wunsch, mit möglichst großen Kabelquerschnitten, möglichst verlustarm Strom zu transportieren.

Bei Freileitungskonzepten haben die damit verbundenen größeren Kabelgewichte einen negativen Einfluss auf Mastabstände und Masthöhen und vermehren die damit einhergehenden umwelttechnischen und genehmigungstechnischen Erschwernisse. Freileitungskabel sind darüber hinaus, bedingt durch die Stahlarmierung zur Aufnahme von Zugkräften im Kabel während der Montage und im Betrieb, schwerer als solche Kabel, die keinen oder nur geringen Zugkräften ausgesetzt sind. Dies verstärkt die Schwierigkeiten, beispielswese Kabel der nächsten Hochspannungsübertragungsgeneration, durch einfachen Austausch alt gegen neu auf bestehenden Strommasten einsetzen zu können.

Generell kennzeichnet den bisherigen Stand der Technik nachteilig die in der Bauphase bis zu 60 m breiten Trassen bei den bekannten Verfahren zur Verlegung von Freileitungen für Hochspannungskabeltrassen aus.

Bekannt und Stand der Technik sind Verfahren zum Bau erdverlegter Leitungen mit Kabeln als Alternative zu Freileitungen sowie die Verwendung von Kabelschutzrohren (siehe auch DE000002831702A1 Verfahren zur Verlegung von Kabeln in Kunststoffrohren) und solche Verfahren, die das Einführen oder Einziehen von Kabeln in Leerrohre erleichtern, z. B. druckluftunterstütz oder durch Schmierstoffe oder durch spezielle Oberflächengestaltung der Leerrohre (z. B. Wellrohre), die die Reibung zwischen Kabel und Leerrohr vermindern.

Große Kabelgewichte erschweren jedoch grundsätzlich den Einzug in bereits verlegte Leerrohre. Gemäß Stand der Technik gibt es diverse Verfahren, Materialien und Vorrichtungen zur Reibungsminderung, die für Kabeleinzugsverfahren eingesetzt werden, die jedoch beispielsweise für das Einziehen schwerer Kabel über größere Entfernung wenig geeignet sind.

Auch sind Verfahren bekannt, die mit elektromechanischer Unterstützung oder mit Verlegerobotern, das Einziehen von Kabeln in unzugänglichen Leerrohren, Kanälen, Tunneln oder dergleichen realisieren.

Die Verlegung von Kabeln in Leerrohren mit Verwendung elektromechanischer Vorrichtungen innerhalb unzugänglicher Leerrohre, Kanäle, Tunnel können in der Regel nicht reversibel gestaltet werden, und dies geht oft mit Verlust solcher Vorrichtungen einher, wenn diese im Leerrohr verbleiben, z. B. beim Einsatz von Lauf- und Stützräder- bzw. Rollen basierter Einzugsverfahren oder Schlitten, die bei eingeschränkter Zugänglichkeit über einen längeren Zeitraum ohne geeignete Wartung in der Regel ihre Funktion für ein reibungsarmes Verfahren weitgehend einbüßen, um zu einem beliebig späteren Zeitpunkt reversibel eingesetzt werden zu können. Insbesondere ist das Einführen mehrerer Kabel oder Medienrohre in ein und dasselbe Leerrohr mit derartigen Verfahren erschwert oder nicht möglich.

Auch ist bekannt, dass Objekte oder Rohrleitungen zunächst schwimmend positioniert, also den Auftrieb nutzend, und erst an Ort und Stelle abgesenkt werden, wie dies im Dükerbau zur Querung von Kanälen und Flüssen und bei Offshoreanlagen praktiziert wird.

Die JP S54-101199 A offenbart des Weiteren ein Verfahren zur Erleichterung der Verlegung eines sehr langen Kabels innerhalb des Rohrs durch Abdecken des Kabels, während das Kabel herausgezogen wird, mit einem Auftrieb liefernden Material mit einem spezifischen Gewicht, welches niedriger ist als das der Flüssigkeit, welche sich im Rohr befindet. Dabei wird das Kabel in ein mit einer Flüssigkeit gefülltes Rohr eingezogen, wobei das Kabel mittels einer vor dem Rohr angeordneten Vorrichtung mit einem Auftriebsmaterial überzogen wird, das ein niedrigeres spezifisches Gewicht als das der Flüssigkeit aufweist, beispielsweise Polyethylen und geschäumtes Polyethylen. Indem das Kabel auf diese Weise mit dem den Auftrieb bereitstellenden Material überzogen wird, soll das Gewicht des Kabels in der Flüssigkeit so weit gesenkt werden, dass die Zugspannung reduziert wird und somit die Beschädigung des in dem langen Rohr liegenden Kabels verringert wird.

Das in der JP S54-101199 A beschriebene Verfahren zeichnet sich insbesondere dadurch aus, dass die verbleibende Zugkraft auf das Kabel, beim Einzugsvorgang in ein geflutetes Rohr, direkt auf das Kabel übertragen werden muss und somit Schäden am Kabel entstehen können. Darüber hinaus erweist sich das Auftriebsmaterial, mit dem das Kabel gemäß der JP S54-101199 A überzogen wird, als thermisch Isolierend, was bei einer Wärme entwickelnden Stromübertragung, wie beispielsweise bei einer Höchstspannungsstromübertragung gegeben, zu einem schädlichen Wärmestau innerhalb der Kabelisolierung und somit zu einer Schädigung des Kabels führen kann. Andere relevante Dokumente sind JP2002271934A; JP2000166043A und DE1959738A1. Eine Veränderung der Dichte des Auftriebsmediums noch eine Zu- und Ableitung von Kühlmedien zum Zwecke der aktiven Kühlung sind in den Dokumente beschrieben.

Keines der bekannten Verfahren, wird jedoch dem Anspruch gerecht, die Probleme bei der Verlegung beispielsweise schwerer bzw. großkalibriger, langer Hoch- und Höchstspannungskabelabschnitte entsprechend den beschriebenen Anforderungen bei terrestrischen Trassen (Onshore-Trassen), wie sie z. B. für den Ausbau der Stromnetze erforderlich sind, zufriedenstellend zu lösen, insbesondere unter Beachtung der Kosten, der langwierigen Genehmigungsprozesse bei Freileitungstechnologien und nicht zuletzt bzgl. zeitkritischer Thematiken, wie sie durch den raschen Zubau von Offshore Windparks sowie durch die Beendigung der KKW-Stromerzeugung entstanden sind.

So sind im Rahmen des Umbaus und der Entwicklung der Netzinfrastruktur für eine bezahlbare, sichere und umweltschonende Energieversorgung zwar technologische Konzepte vorhanden, in der Art, wie sie z. B. im Netzentwicklungsplan (NEP) dargestellt sind. Die Konzepte beruhen aber teilweise auf noch nicht ausgereiften Technologien, insbesondere solche, die mit der Hochspannungsgleichstrom Übertragung der 2. Generation (HGÜ2) in Verbindung stehen, was sich zeitkritisch auf die technische Umsetzung des Netzinfrastrukturausbaus auswirken kann.

Die Erdverlegung von Kabeln erfordert eine zeitnahe Durchführung der erforderlichen Erdbaumaßnahmen und der Kabelverlegung (Montage) ohne einem wesentlichen Anspruch, insbesondere der zeitlichen Entkopplung von Erdbau und Kabelverlegung, vom Grundsatz her Rechnung tragen zu können.

Die Erdkabelverlegung ist insbesondere vom Grundsatz her nicht reversibel, auch wenn solche in Schutzrohren verlegt werden.

Bekannte Verfahren sehen gemäß Stand der Technik eine Nutzung der Abwärme, verursacht durch Verlustleistung bei der Übertragung von Strom, nicht vor.

Die Einhaltung des Zeithorizonts für die Bereitstellung neuer leistungsfähiger und stabiler Netze, insbesondere der Hochspannungsnetze, ist gemessen an den zu leistenden Teilprozessen - für Forschung und Entwicklung, Genehmigungsplanung, Konsensfindung, Auftragsvergabe, Detailplanung, Herstellung, Lieferung, Bau, Montage, Abnahme bis zur Inbetriebnahme-, ist einerseits eine der größten nationalen und länderübergreifenden Herausforderungen der Nachkriegszeit, verbunden mit hohen Investitions- und Finanzierungskosten, andererseits durch Widerstände in der Gesellschaft und der unmittelbar Betroffenen geprägt.

Ein Umsetzungskonzept, beispielsweise für den Transfernetzausbau, welches auf eine technologische Infrastruktur und auf Verfahren setzt, welche Stand der Technik sind, ist weniger flexibel und mit größeren Finanzierungsrisiken behaftet als ein Umsetzungskonzept, welches das erfindungsgemäße Verfahren einbezieht und offen ist für zukünftige technische Entwicklungen, ähnlich wie dies Autobahnen in Bezug auf die zukünftige Entwicklung der KFZ-Technik sind.

Die beschriebenen Nachteile des Stands der Technik werden durch das erfindungsgemäße Verfahren vermieden, zumindest deutlich gemindert.

Das mit dem erfindungsgemäßen Verfahren geförderte größere Ausnutzen und Einbinden verfügbarer technischer Potentiale des Rohrleitungsbaus, kann insbesondere die gesellschaftliche Akzeptanz zur Stromnetzerweiterung fördern und damit die Realisierungszeit verkürzen. Insbesondere aber wird die Realisierungszeit und die Realisierungssicherheit verstärkt und Finanzierungsrisiken vermindert, sowohl durch zeitgleiche bzw. simultane Prozesse, als auch. durch die Aufteilung des Gesamtprozesses in bevorzugte Prozessphasen, sowie durch die Entkopplung und Entzerrung zeitkritischer Teilprozesse und durch die Reversierbarkeit des Verfahrens, die das erfindungsgemäße Verfahren begünstigen.

Grundlage der Erfindung und Anforderungen sind es deshalb, ein Verfahren in mehreren Verfahrensschritten bereitzustellen, insbesondere umfassend wenigstens einen oder mehrere der folgenden Verfahrensschritte,
- Verfahrensschritt a): Bereitstellung der Leerrohrfunktionalität (ggf. Leerrohrleitungsbau) ;
- Verfahrensschritt b): Bereitstellung der Funktionalität von Tiefpunkt- und Hochpunkt-Kopfstationen (ggf. Muffenschachtbau);
- Verfahrensschritt c1): Herstellung des so genannten Nutzlast-Transportrohr-Strangs;
- Verfahrensschritt c2): Bereitstellung eines Vorschubsystems (Gelenkzug)
- Verfahrensschritt d): auftriebsgestütztes Verlegen des Nutzlast-Transportrohr-Strangs;
- (Optional) Verfahrensschritt e): auftriebsgestützte Demontage des Nutzlast-Transportrohr-Strangs
welches dadurch gekennzeichnet ist, dass
- eine Zeitliche Entkopplung und Entzerrung durch die Verlagerung von Teilprozessen mit flexibler Technik in regionale Teilprozesse und Projekte erreicht wird, die einen erheblichen Zeitgewinn gewährleisten können;
- die entkoppelten bautechnischen Teilprozesse frühzeitig und parallel für viele Trassenteilabschnitte umgesetzt werden können, und die Umsetzung der Verfahrensschritte a) und b) durch vorzugsweise regionale Bau- und Montageunternehmen erfolgen kann, die die Qualifikation für den spezifizierten Rohrleitungsbau nach Stand der Technik besitzen;
- durch das leerrohrbasierte Verfahren größere Unabhängig erreicht wird vom derzeitigen Stand der Technik bezüglich der Kabelentwicklung, der Kabelherstellung, der Verfügbarkeit der Kabel, des Kabeltransports zum Einbauort und der eigentlichen Hochspannungsübertragungstechnologie, die zum Einsatz kommen soll;
- die benötigten Bautrassenbreiten für Stromtrassen verringert werden können;
- zeitnah und frühzeitig die Planung und der Ausbau der Leerrohrnetz-Infrastruktur erfolgen kann, insbesondere auch entlang bestehender Verkehrswege;
- auch schwere Hoch- und Höchstspannungskabel oder Medienrohre mit kurzer Montagezeit zum beliebigen Zeitpunkt später verlegt werden können, wenn Forschung, Entwicklung, der jeweilige Genehmigungsstatus und die Verfügbarkeit der Kabel sowie die Finanzierungmöglichkeiten dies erlauben;
- funktionstechnische, sicherheitstechnische, umwelttechnische und thermische Überwachung der Netz-, Kabel- und Medienrohrteilabschnitte und eine Abwärmenutzung aus den Übertragungsverlusten begünstigt werden; und/oder
- die Nachhaltigkeit durch die Begünstigung eines reversiblen Ausbaus und Austauschs von Kabeln und Medienrohren nach Erfordernis mit demselben erfindungsgemäßen Verfahren jederzeit möglich ist.

Die Anforderungen können mit einem leerrohrbasierten Infrastrukturkonzept erfüllt werden, welches erfindungsgemäß dadurch gekennzeichnet ist, dass durch ein auftriebsgestütztes Montageverfahren in einem multifunktionalen Leerrohr-Transportrohr-System eine widerstandsarme reversible Verlegung von Kabeln, Medienrohren oder anderen linienförmigen Nutzlasten ermöglicht wird.

Mit einer technischen Lösung, dem erfindungsgemäßen Verfahren, welches sich aus der Summe der nachfolgend beschriebenen Verfahrensschritte zusammensetzt und als Gesamtprozess beschrieben ist, und mit den zugehörigen Vorrichtungen, wird die Montage von Kabeln und Medienrohren grundlegend in einem Leerrohr-Transportrohr-System so realisiert, dass mindestens ein Kabel bzw. ein Medienrohr oder ein weiteres Leerrohr in mindestens einem Leerrohrsystem mittels mindestens einem Nutzlast-Transportrohr-Strang auftriebsgestützt und damit reibungs- und widerstandsarm eingeführt bzw. eingezogen und platziert werden kann. Die Nutzung des physikalischen Effekts des Auftriebs innerhalb des erfindungsgemäßen Verfahrens steht im Kern des Erfindungsgedankens und ermöglicht die vorteilhafte Aufteilung des Gesamtverfahrens in Verfahrensteilschritte.

Bei dem erfindungsgemäßen Verfahren wird der Durchmesser des Transportrohrs, und damit der wirksame Auftrieb, primär auf das jeweilige Gewicht des Nutzlast-Transportrohr-Strangs sowie auf die Dichte des erfindungsgemäß verwendeten Auftriebsmediums (Montagemedium) abgestimmt.

Der Durchmesser des Leerrohres erfüllt die Forderung, dass der Gesamtquerschnitt des Nutzlast-Transportrohr-Strangs innerhalb des Leerrohres während des Einführungsprozesses frei beweglich bleibt und somit das reibungs- und widerstandsarme Einzugsverfahren sichergestellt werden kann.

Das zu verlegende Leerrohr wird vorzugsweise als Druckrohr ausgebildet, damit der Auftrieb auch in geodätisch nicht horizontalem Leerrohrverlauf wirksam genutzt werden kann.

Im Verfahrensablauf wird das auf Dichtheit geprüfte Leerrohr erfindungsgemäß, vorteilhafterweise vor der Einführung und Montage des Nutzlast-Transportrohr-Strangs, mit einem Auftriebsmedium (Montagemedium) geflutet, beispielsweise mit Wasser, um so dem Nutzlast-Transportrohr-Strang innerhalb des Leerrohres während des Einführungsprozesses den erfindungsgemäß so erzeugten Auftrieb bereitzustellen, vorteilhafterweise auf der gesamten Länge des Einzugs bzw. bis zum Erreichen der Zielposition des Nutzlast-Transportrohr-Strangs.

Da das erfindungsgemäße Verfahren vorteilhafterweise auch gleichermaßen reversibel anwendbar ist, kann eine Testfahrt beispielsweise mit einem Transportrohr-Strang durchgeführt werden, der mit einem Mediumrohr als Ballastrohr annähernd gleichen Gewichts (Nutzlast) beladen ist, um den späteren Verfahrensablauf unter Realbedingungen zu testen, vorzugsweise bevor der Nutzlast-Transportrohr-Strang eingeführt wird.

Im Verfahrensablauf, kann erfindungsgemäß vorteilhafterweise die Dichte des Auftriebsmediums im Leerrohr, wenn dies erforderlich wird oder sinnvoll ist, auch während des Montageprozesses vorzugsweise durch Zusätze und kontinuierlichen Austausch erreicht werden, der vorzugsweise. mittels Kreislaufführung des Auftriebsmediums erzeugt wird. Vorteilhafterweise werden dazu eine Rohrleitungs- oder Schlauchverbindung zwischen dem Grundablass einer so genannten Tiefpunkt-Kopfstation und einer so genannten Hochpunkt-Kopfstation hergestellt. Fluide höherer Dichte werden z. B. zur temporären Stabilisierung von Bohrlöchern im Erdreich verwendet und sind somit gemäß Stand der Technik verfügbar.

Eine weitere Möglichkeit der Anpassung des Auftriebsverhaltens an die Erfordernisse während der Montage besteht darin, Teilfüllungen des Auftriebsmediums im Leerrohr zu erzeugen, vorzugsweise über den Grundablass des so genannten Montage-Flanschenrohrs in der Tiefpunkt-Kopfstation.

Desweiteren wird die Nutzung des Auftriebs erfindungsgemäß vorteilhafterweise dadurch verfeinert und flexibilisiert, dass Ballastmedien Verwendung finden können, die in Ballastrohre, die vorzugsweise in den Nutzlast-Transportrohr-Strang integriert werden, bzw. in multifunktionale Durchgangs-Kabelfixierungs- bzw. -Kabelzentrierungsrohre ein- und ausgespeist werden können. Ein vorzugsweise innenliegendes bis kurz vor das Ende des Ballastrohrs geführtes Ausblasrohr ermöglicht bzw. unterstützt dazu die Ein- und Ausspeisung des Ballastmediums.

In einem in den Verfahrensschritten a) und b) des erfindungsgemäßen Verfahrens bereitgestellten Leerrohrsystem, kann vorteilhafterweise durch das Einwirken und das Zusammenspiel von Vorschub und Zugkraft in Verbindung mit dem auf den Nutzlast-Transportrohr-Strang dauerhaft wirksamen Auftrieb der Nutzlast-Transportrohr-Strang auch während des Einführungsprozesses vor- und zurückbewegt werden.

Durch den Auftrieb, der in einer besonderen Ausgestaltung des erfindungsgemäßen Verfahrens falls erforderlich durch Dichteänderung des Auftriebsmediums und/oder durch Ballastmedien veränderbar ist, sowie durch die Möglichkeit der Erzeugung von alternierenden Teilfüllungs- bzw. Teilentleerungsprozessen, können auch schwere Kabel, wie sie z. B. als Hoch- und Höchstpannungskabel ausgeführt werden, auch über größere Entfernungen, bzw. in langen Teilabschnitten reibungs- und widerstandsarm flexibel und sicher verlegt werden, vorteilhafterweise ohne gleichzeitige gemäß Stand der Technik typische Baumaßnahmen mit offenen Gräben oder breiten Bautrassen.

Die auftriebsgestützte Einführung eines Nutzlast-Transportrohr-Strangs kann mit zusätzlichen Vorrichtungen über den gesamte Montageabschnitt, beispielsweise mittels zugseilgeführter oder autonom angetriebener unterwassertauglicher Kamera, die verfahrensbedingt und vorteilhafterweise ebenfalls auftriebgestützt verfahren werden können, begleitet werden, um die Qualität des Auftriebsverhaltens auch punktuell überwachen zu können.

Ein Kamerazugseil wird vorzugsweise dazu bereits zu Beginn des Montageprozesses ggf. zusammen mit einem Zugseil für den Nutzlast-Transportrohr-Strang verlegt und kann in Doppelfunktion für das Einziehen weiterer Zugseile für weitere Nutzlast-Transportrohr-Stränge oder Leerrohre 2. Ordnung genutzt werden.

Vorteilhafterweise, können je nach Anforderung Fixierungen bzw. Zentrierungen erfindungsgemäß Verwendung finden, die ein oder mehrere Kabel bzw. Nutzlasten innerhalb des Nutzlast-Transportrohr-Strangs in der gewünschten Position halten.

Auch können erfindungsgemäß vorteilhafterweise weitere durchgehende Rohre in den Nutzlast-Transportrohr-Strang eingezogen werden, die sowohl als Fixierung für ein Kabel verwendet werden können, als auch in Mehrfachfunktion während der Montagephase erfindungsgemäß als Ballastrohre und später als Medienrohre oder als Leerrohre, beispielsweise für das Einziehen von ITK-Kabeln sowie zur Abwärmenutzung bzw. zur Kühlung genutzt werden können.

Der Einzug von Kabeln in solche Leerrohre 3. Ordnung mit Doppelfunktion kann vorteilhafterweise nach demselben erfindungsgemäßen Verfahren erfolgen wie beschrieben.

Unabhängig von einer späteren Nutzlast, wie Kabel, Rohre oder Medien können in das in Verfahrensschritt a) und b) des erfindungsgemäßen Verfahrens bereitgestellte Leerrohrsystem gemäß Verfahrensschritt d) zunächst Leerrohre 2. Ordnung im vorzugsweise erdverlegten Leerrohr (Leerrohr 1. Ordnung) eingeführt bzw. eingezogen werden, beispielsweise um damit die Nutzung des verfügbaren Leerrohrquerschnitts zu optimieren, dadurch gekennzeichnet, dass vorzugsweise das Material von Leerrohren 2. Ordnung ein spezifisches Gewicht haben sollte, welches annähernd dem des Auftriebsmediums (beispielsweise. Wasser) entspricht. Ziel kann es vorteilhafterweise sein, dass im Verständnis der weitergehenden Ausgestaltung des erfindungsgemäßen Verfahrens immer ein Leerrohr 2. Ordnung zur Beladung zur Verfügung steht, vorteilhafterweise mit einem auf der Gesamtlänge eingezogenen Montageseil versehen, wie es auch beim Verlegen des Leerrohres 1. Ordnung vorgesehen ist. Dieses Prinzip ist das so genannte +1-Prinzip, mit dem es stets gelingt, auch zu einem späteren Zeitpunkt weitere Nutzlast-Transportrohr-Module oder auch Montagehilfen wie Zugseile, insbesondere wenn diese selbst ein hohes Eigengewicht aufweisen, mit dem erfindungsgemäßen Verfahren zu verlegen bzw. einzuziehen.

Die Herstellung eines Nutzlast-Transportrohr-Strangs in Verfahrensschritt c) wird insbesondere nutzbringend angewendet, wenn schwere Hoch- und Höchstspannungskabel verlegt werden sollen. In einem dem erforderlichen Auftrieb bemessenen Transportrohr wird außerhalb des Leerrohres ein so genannter Nutzlast-Transportrohr-Strang vormontiert, um anschließend im Verfahrensschritt d) des erfindungsgemäßen Verfahrens reibungs- und widerstandsarm und für das Kabel bzw. Medienrohr quasi zugkraftbelastungsfrei, auftriebsgestützt im Leerrohr verlegt bzw. positioniert zu werden.

Für die Herstellung eines Nutzlast-Transportrohr-Strangs in Verfahrensschritt c) des erfindungsgemäßen Verfahrens, wird vorteilhafterweise zunächst ein Kabel, bzw. ein Medienrohr, bzw. ein Zugseil oder eine andere Nutzlast außerhalb des Leerrohres in der vorgesehene Länge ausgelegt bzw. zusammengestellt und anschließend ein Transportrohr, vorteilhafterweise aus Kunststoff bestehend, in ganzer Länge, vorzugsweise jedoch in Teillängen bzw. schussweise, über das Kabel oder die Nutzlast und ggf. gleichzeitig über die Kabelfixierungs- und Medienrohre aufgezogen (aufgefädelt), wie beispielsweise Rohre zur Aufnahme eines Ballastmediums.

Vorteilhafterweise werden dazu beispielsweise unter einem so ausgelegten Kabel mitgeführte Rollenbügel zur Kabelaufnahme oder Gleitmittel oder Gleithilfen eingesetzt, die auch dem Zwecke der Verhinderung von Kabelbeschädigungen dienen.

Vorteilhafterweise können zu diesem Zweck in einer besonderen Ausgestaltung des Verfahrens erfindungsgemäße Vorrichtungen, so genannte Gleitmatten eingesetzt werden, die entsprechend dem erfindungsgemäßen Verfahren in den jeweiligen Rohrschuss eingezogen und nach dem Verziehen des Rohrschusses wieder entfernt werden können. Die Gleitmatte, wird vorzugsweise zu Beginn des Auffädelns in den jeweiligen Transportrohrschuss eingeführt und kann gegen ungewolltes Herausrutschen gesichert werden. Nach Erreichen der Zielposition des Rohrschusses kann die Gleitmatte wieder entnommen werden, vorteilhafterweise durch Lösen einer Rutschsicherung kurz vor Erreichen der Zielposition des Rohrschusses, und bei allen weiteren gleichartigen Vorgängen wiederverwendet werden.

Medienrohre für Ballastmedien innerhalb des Nutzlast-Transportrohr-Strangs, also vorteilhafterweise durchgehende Rohre (Länge ca. wie Kabel oder andere Nutzlasten), die erfindungsgemäß zur Feinregulierung des wirksamen Auftriebs Verwendung finden können, werden über den Endkopf des Nutzlast-Transportrohr-Strangs angeschlossen, der in einer bevorzugten verlängerter Ausführung am Ende des Nutzlast-TransportrohrStrangs vorteilhafterweise mit einem Anschluss für die Ballastmediumzufuhr sowie gleichermaßen mit einem Anschluss an ein Ausblasrohr versehen wird.

Vorteilhafterweise werden die einzelnen Transportrohrschüsse mittels zweiteiligem Schweißspiegel mit Aussparung und thermisch isoliertem und gesichertem Abstand zum Kabel (Zangenprinzip) so verschweißt, dass vorzugsweise ein das Kabel umhüllender Transportrohrstrang (Nutzlast-Transportrohr-Strang) entsteht, der erfindungsgemäß vorzugsweise nach Fertigstellung in Vorbereitung auf die Dichtheitsprüfung an beiden Enden dicht verschlossen wird. Bei durchgehenden innenliegenden Zentrierungen oder sonstigen innenliegenden Rohren wird beispielsweise durch thermische Isolierung verhindert, dass bei der Montage des Transportrohrschusses Beschädigungen durch den Schweißvorgang entstehen. Dies kann auch durch den Einsatz von Schweißmuffen erzielt werden, deren äußere Kanten darüber hinaus vorteilhafterweise angeschrägt sind.

Es ist verfahrensbedingt möglich, das widerstandsarme Einführen eines Nutzlast-Transportrohr-Strangs, der eine ausreichende Biege- und Torsionssteifigkeit besitzt, ausschließlich durch einen außerhalb des Leerrohres generierten und übertragenen Vorschub auf den Nutzlast-Transportrohr-Strang zu realisieren, d. h. ohne Zugkraftunterstützung, die beispielsweise zusätzlich am Kopf des Nutzlast-Transportrohr-Strangs übertragen wird.

Eine besonderen Ausgestaltung des Verfahrens ist insbesondere dann vorgesehen, wenn der Nutzlast-Transportrohr-Strang keine hinreichende Biege- und Torsionssteifigkeit besitzt, dadurch gekennzeichnet, dass der Nutzlast-Transportrohr-Strang dann vorzugsweise mit einem Zugkopf ausgestattet wird, mit Anschlussmöglichkeit für mindestens ein Zugseil.

Zur Einführung des Nutzlast-Transportrohr-Strangs in das Leerrohr in Verfahrensschritt d wird zur Übertragung des Vorschubs in einer vorteilhaften Ausgestaltung des erfindungsgemäßen Verfahrens ein frei geführtes, d. h. nicht schienengeführtes Zuführungsverfahren, ein so genanntes aktives Transportsystem mit Vorrichtungen angewendet, mit welchem der Vorschub und Längstransport des vormontierten Nutzlast-Transportrohr-Strangs ermöglicht und sicherstellt wird.

Das nicht schienengebundene Längstransportsystem für den Nutzlast-Transportrohr-Strang beinhaltet Vorrichtungen, die im wesentlichen aus Fahrgestellen, Auflagern und Transporttraversen bestehen, die vorzugsweise zu einer Art Gelenkzug zusammengestellt werden. Diese Vorrichtungen werden vorzugsweise über den Nutzlast-Transportrohr-Strang geführt bzw. direkt über dem vormontierten Nutzlast-Transportrohr-Strang zusammengestellt und können so den Nutzlast-Transportrohr-Strang aufnehmen und schubsicher verbinden. Vorzugsweise wird die Aufnahme oder Beladung sowie die Schubsicherung mit Spanngurten durchgeführt, mit denen der Nutzlast-Transportrohr-Strang vorteilhafterweise unterhalb der Transporttraversen mit der notwendigen Bodenfreiheit befestigt wird.

Solche nicht schienengeführte Zuführungsverfahren sind zu bevorzugen, wenn z. B. Leerrohrtrassen entlang bzw. auf bestehenden Straßen und Autobahnen verlaufen. Gleichwohl können zwangsgeführte Zuführungsverfahren, in schienengeführter Ausführung oder mittels Rollengängen oder mittels Förderbändern ebenso im Rahmen des erfindungsgemäßen Verfahrens eingesetzt werden.

Schienengeführte Zuführungsverfahren sind zu bevorzugen, wenn z. B. Leerrohrtrassen entlang bestehender Eisenbahntrassen führen, unter Nutzung der bestehenden Infrastruktur.

Eine weitere Möglichkeit für den Längstransport des Nutzlast-Transportrohr-Strangs ist eine Art Schlepplift-, bzw. ein Tragliftverfahren.

Wenn die Herstellung des Nutzlast-Transportrohr-Strangs in Verfahrensschritt c) des erfindungsgemäßen Verfahrens abgeschlossen ist, werden alle Vorbereitungen zur Durchführung des Verfahrensschritts d des erfindungsgemäßen Verfahrens getroffen, insbesondere die Flutung des Leerrohrabschnittes nach Schließen des Leerrohres mittels Montage-Flanschenrohr, einem multifunktionalen Montageverschluss des Leerrohres in der so genannten Tiefpunkt-Kopfstation. Vorteilhafterweise, wird der gesamte Nutzlast-Transportrohr-Strang mit geeigneter Vorschubübertragung, mittels aktivem Transportsystem und vorteilhafterweise mittels Kraftübertragung durch Fahrzeuge oder mittels Zugseil verfahren. Dies hat den Vorteil, dass so das Einführen nach Lösen der Spanngurte über bzw. vor den Einführungsvorrichtungen der Hochpunkt-Kopfstation ermöglicht wird und quasi beim Überfahren der Hochpunkt-Kopfstation die Absenkung und Einführung, unter Aufrechterhaltung des erforderlichen Vorschubs, in das geflutete Leerrohr erfolgen kann.

Um den Vorschub, der vorteilhafterweise außerhalb des Leerrohres bzw. außerhalb der Hochpunkt-Kopfstation auf den Nutzlast-Transportrohr-Strang übertragen wird, so umzulenken, dass der Vorschub in Längsrichtung und auch im Bereich von Biegeradien des Nutzlast-Transportrohr-Strangs bzw. in Richtung Leerohrachse im Bereich und innerhalb der Hochpunkt-Kopfstation reibungsarm und ohne Ausknicken übertragen werden kann, werden vorzugsweise Einführungsvorrichtungen mit Spezialrollen zur Zwangsführung so eingesetzt, dass die Biegeradien des Nutzlast-Transportrohr-Strangs im Bereich der Hochpunkt-Kopfstation in der für den Einführungsvorgang optimierten Auslegung kontrollierbar erhalten bleiben und gleichzeitig die wirksame Vorschubkraft innerhalb der Hochpunkt-Kopfstation in Richtung Achse des Nutzlast-Transportrohr-Strangs übertragen werden kann, um so den optimalen Vorschub auch in Richtung Leerrohrachse umlenken und übertragen zu können.

Für Nutzlast-Transportrohr-Stränge mit Muffen- oder Flanschverbindungen werden Führungsrollen im Bereich der Hochpunkt-Kopfstation in einer erfindungsgemäßen Ausgestaltung der Einführungsvorrichtungen federbelastet oder vorteilhafterweise beweglich und höhenverstellbar und mit einer Anlaufvorrichtung ausgeführt.

Zur Aufrechterhaltung des Vorschubs bis zur Erreichung des Zielpunktes wird das Ende des Nutzlast-Transportrohr-Strangs vorteilhafterweise mit einem Endkopf ausgestattet, der entsprechend so lang ausgeführt wird, dass der Nutzlast-Transportrohr-Strang vorteilhafterweise um ein solches Teilstück länger ist als das Kabel bzw. das Medienrohr bzw. eine Nutzlast innerhalb des Nutzlast-Transportrohr-Strangs, und zwar so lang, dass die Vorschubübertragung in der bevorzugten beschriebenen Weise vorteilhafterweise bis zum Erreichen der Endposition des Nutzlast-Transportrohr-Strangs aufrechterhalten werden kann.

Die Langrohrausführung des Endkopfes hat den Vorteil, dass diese beim reversierbaren Prozess, welches ein Hauptvorteil des gesamten erfindungsgemäßen Verfahrens ist, und zum Zweck eines eventuellen späteren Ausbaus und des wieder Herausziehens des Nutzlast-Transportrohr-Strangs gemäß Verfahrensschritt e deshalb geeignet ist, insbesondere bei Rückwärtsbewegungen des Nutzlast-Transportrohr-Strangs während des Einziehvorgangs, mit der Schubkraft-Zugkraft-Umkehrung die Funktion der Vorschub- als auch Zugkraftübertragung mittels aktivem Transportsystem auf den Nutzlast-Transportrohr-Strang bzw. über den Endkopf bis zum Erreichen der Endposition erhalten bleibt und somit der Funktionssicherheit des gesamten erfindungsgemäßen Verfahrens dient.

Eine Vorrichtung des erfindungsgemäßen Verfahrens ist ein Montage-Ausbaustück, in der Ausgestaltung als multifunktionales Montage-Flanschenrohr und Montageverschluss des Leerrohres innerhalb der Tiefpunkt-Kopfstation, markiert auf dem Montageweg die Zielposition für den Kopf des Nutzlast-Transportrohr-Strang im gefluteten Leerrohrabschnitt.

Das multifunktionale Montage-Ausbaustück erfüllt die Funktion des Verschlusses des Leerrohres gegen den Druck des mit dem Auftriebsmedium gefluteten Leerrohres. Die Demontage wird vorzugsweise nach der Entleerung und der Druckentlastung durchgeführt. Das Montage-Ausbaustück in Form eines multifunktionale Montage-Flanschenrohrs ist dazu vorzugsweise mit einem kombinierten Entleerungs- und Füllstutzen mit Absperrarmatur ausgestattet, über die die Entleerung und Befüllung des Leerrohres sowie der Austausch und das Umpumpen und Abpumpen von Auftriebsmedien erfolgen kann.

In einer Ausgestaltung des Verfahrens mit Zugkraftunterstützung, beispielsweise mit einem Zugseil, welches vorzugsweise im bzw. am erfindungsgemäßen Zugkopf des Nutzlast-Transportrohr-Strangs befestigt wird und welches vorteilhafterweise mittels Montageseil durch den Leerrohrabschnitt vorteilhafterweise gleichermaßen mit dem erfindungsgemäßen verfahren eingezogen werden kann, kann der Vorschub aus dem aktivem Transportsystem aus dem Hochpunkt-Kopfstation seitigen Zuführungsverfahren durch Zugkraft Tiefpunkt-Kopfstation seitig unterstützt werden. Ein erfindungsgemäßes Montage-Ausbaustück, in der Ausgestaltung als multifunktionales Montage-Flanschenrohr und Montageverschluss des Leerrohres innerhalb der Tiefpunkt-Kopfstation, enthält dazu eine vorzugsweise abdichtbare Durchführungsvorrichtung für die verwendete Zugvorrichtung, welche ggf. in einem Leerrohr 3. Ordnung geführt wird. Mit einem angepassten Verfahren, kann das Zugseil ggf. in einem Leerrohr 3. Ordnung Tiefpunkt-Kopfstation seitig durch das erfindungsgemäße multifunktionale Montage-Flanschenrohr gezogen werden.

Eine weitere bevorzugte Ausgestaltung des erfindungsgemäßen Montage-Flanschenrohrs sieht eine vorzugsweise innerhalb des Montage-Flanschenrohrs montierte Umlenkrolle vor, über die ein Zugseil, insbesondere über ein aus Kunststoffgewebe bestehendes Zugseil, auch innerhalb eines Leerrohres rückgeführt wird, um die Hochpunkt-Kopfstation seitig erzeugte Zugkraft auf den Zugkopf des Nutzlast-Transportrohr-Strangs übertragen zu können.

Der Zugkopf des Nutzlast-Transportrohr-Strangs und das multifunktionale Montage-Flanschenrohr sind vorteilhafterweise demontierbar ausgeführt, vorzugsweise angeflanscht, und können deshalb vorteilhafterweise wiederverwendet werden.

Der mit dem Verfahrensschritt d) endpositionierte Nutzlast-Transportrohr-Strang verbleibt vorteilhafterweise zusammen mit dem Kabel bzw. mit dem Medienrohr bzw. mit der Nutzlast an Ort und Stelle im Leerrohr. Das erfindungsgemäße auftriebsgestützte Verlege- und Montageverfahren ist vorteilhafterweise dadurch reversibel einsetzbar und erlaubt deshalb den Ausbau des Kabels bzw. des Medienrohres bzw. der Nutzlast mit den gleichen Vorrichtungen und damit vorteilhafterweise mit demselben erfindungsgemäßen Verfahren, insbesondere zwecks Kabel- oder Medienrohraustauschs zu einem späteren Zeitpunkt, in einem vorzugsweise optionalen Verfahrensschritt e), der die Umkehrung des Verfahrensschritts d) ist, auch ohne Funktionsverlust.

Vorteilhafterweise können im Leerrohr-Transportrohr-System generell sowohl funktionstechnische, sicherheitstechnische, umwelttechnische und thermische Überwachungseinrichtungen und ITK-Kabel verlegt werden, sowie ggf. erforderliche Medien (z. B. Schutzgas) oder nützliche andere Medien geführt werden, z. B. zum Zwecke der Abwärmenutzung oder Kühlung.

Erfindungsgemäß können vorteilhafterweise das Transportrohr aber auch das Leerrohr selbst, nach Fertigstellung der Montagemaßnahme zusätzlich auch als Medienrohr genutzt werden, z. B. für einen Gastransport oder zum Zweck der Abwärmenutzung oder aktiven Kühlung.

Das Verfahren und die Vorrichtungen zur auftriebsgestützten Verlegung von Kabeln oder Medienrohren in einem multifunktionalen Leerrohr-Transportrohr-System bieten vielfältige weitere Vorteile:
Der Leerrohrleitungsbau, als Verfahrensschritt a des erfindungsgemäßen Verfahrens, erfordert dem Stand der Technik entsprechend geringere Grabenbreiten bzw. Schlitzbreiten bzw. Bautrassenbreiten, verglichen mit den üblichen Trassenbreiten für den Bau von Hochspannungsleitungen und er lässt sich gemäß dem Erfindungsgedanken vorteilhafterweise auch auf, an bzw. seitlich von Verkehrswegen, Straßen und Autobahnen sowie auf und an Brückenbauwerken realisieren, wie dies im Rohrleitungsbau für andere Medienrohre (z. B. Gas, Trinkwasser, Abwasser) Stand der Technik ist.

Vorteilhafterweise kann die Bereitstellung des Leerrohrsystems als Verfahrensschritt a des erfindungsgemäßen Verfahrens und die Bereitstellung der Muffenschächte im Verfahrensschritt b) nahezu unabhängig von der späteren Kabelverlegung frühzeitig, zeitlich und technologisch entkoppelt als sekundäre Infrastrukturmaßnahme ausgeführt werden, ggf. mit eigenständigem Genehmigungs- und Finanzierungsprozedere, und vorteilhafterweise ohne frühzeitiges Detailwissen bzgl. Kabeltechnologie und Kabelqualität. Dies ist vorteilhaft insbesondere dann, wenn eine solche oder eine andere zentrale Technologie noch nicht ausgereift ist. Dies kann aufgrund der Anwendung des erfindungsgemäßen gesplitteten Verfahrens zu erheblichen Zeiteinsparungen für den Gesamtprozess führen, die Folgekosten von Fehlentwicklungen durch vereinfachten Kabelaustausch vermindern und helfen, den zukünftigen technologischen Fortschritt schneller umsetzen zu können.

Vorteilig ist, dass in der technischen Ausgestaltung des erfindungsgemäßen auftriebsgestützten Kabeleinzugsverfahrens in den Kopfstationen (Hochpunkt- und Tiefpunkt-Kopfstationen), die auch Muffenschächte genannt werden, einerseits Leerrohrverbindungseinrichtungen angeschlossen werden können und andererseits vorteilhafterweise die späteren Kabelverbindungen mittels Kabel- und Rohrmuffen hergestellt und ggf. auch Überwachungseinrichtungen platziert werden können.

Die Herstellung und das Trennen der Verbindungen von Kabeln, von Leerrohren, Medienrohren und Transportrohrenden, einschließlich des Trennens der Verbinden von darin enthaltenen Medien- oder Leerrohren, sowie von Anschlüssen zur Ein- und Ausspeisung von Medien und dergleichen innerhalb und im Bereich der Kopfstationen bzw. Muffenschächte werden durch das erfindungsgemäße Verfahrens begünstigt.

Die Bereitstellung der Hochpunkt- und Tiefpunkt-Kopfstationen in Verfahrensschritt b) des erfindungsgemäßen Verfahrens kann im Zuge der Bereitstellung des Leerrohrsystems (Verfahrensschritt a) oder zeitlich versetzt beispielsweise als jeweils punktuelle Baumaßnahme zu einem späteren Zeitpunkt erfolgen, wenn beispielsweise die Spezifikationen für Muffenschächte unter Berücksichtigung der Muffenabstände bzw. der Teilabschnittslängen zur Verlegung von Kabeln bzw. Medienrohren feststehen.

Durch die Begünstigung einer späteren aktiven Kühlung von Kabeln mit gasförmigen oder flüssigen Kühlmedien, die darüber hinaus einer Abwärmenutzung zugeführt werden können, können Wirkungsgradverbesserungen erzielt werden.

Vorteilig ist, dass die Verfahrensschritte c und d des erfindungsgemäßen Verfahrens zu einem erheblich späteren Zeitpunkt nach Beendigung der Verfahrensschritte a und b erfolgen können.

Bei Einsatz des erfindungsgemäßen Verfahrens kann vorteilhafterweise dementsprechend der Kabelaufbau vereinfacht werden, da insbesondere die typische Armierungsschicht zwecks Aufnahme von Kabelzugkräften entfallen kann und dadurch auch die späteren Transport-, Montage- und Betriebsbedingungen begünstigt sind. Es werden so infolge des erfindungsgemäßen Verfahrens Kosteneinsparungen bei der Kabelherstellung und beim Kabeltransport erzielt. Die Gewichtseinsparung begünstigt unter anderem die transportierbare Kabellänge pro Transporteinheit unter Berücksichtigung der Maximallasten für Verkehrswege.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:

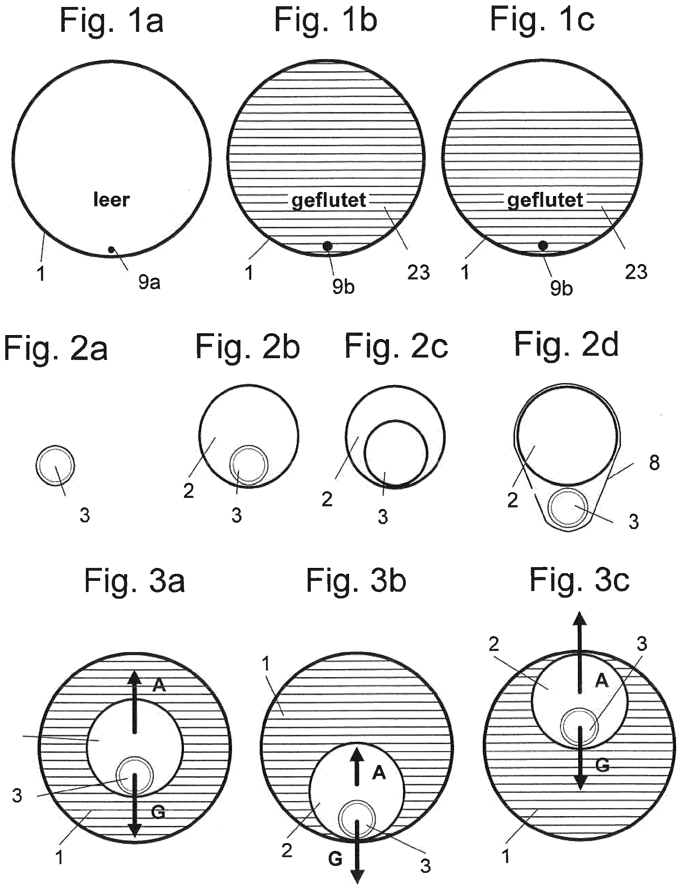

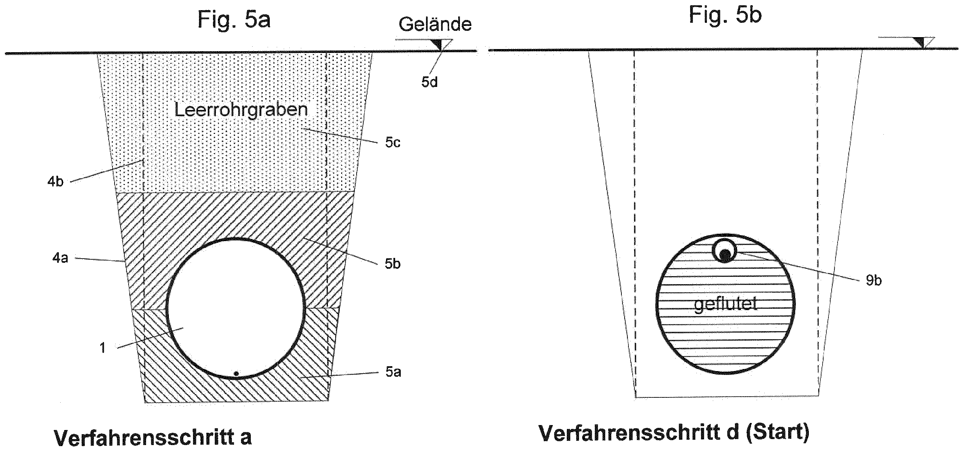

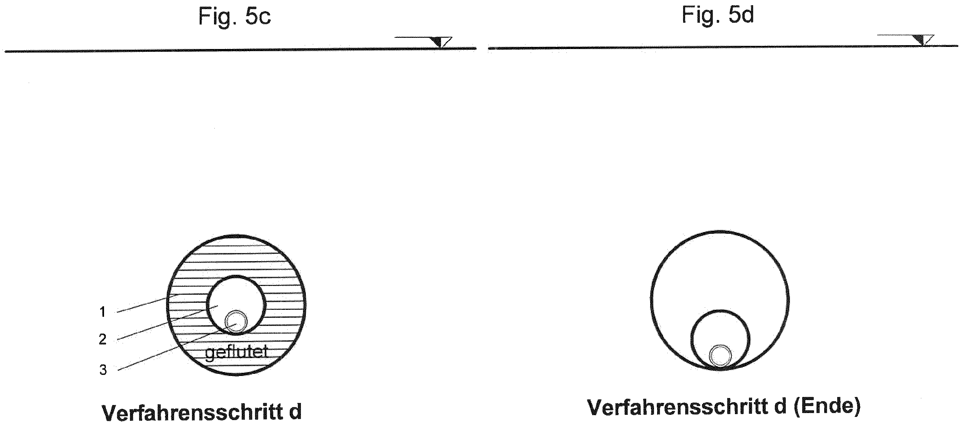

Fig. 1a und Fig. 1b einen schematischen Schnitt durch ein Leerrohr 1 im leeren und im Vollquerschnitt gefluteten Zustand. Die Spezifikation für das Leerrohr richtet sich verfahrensbedingt nach den Abmessungen des Nutzlast-Transportrohr-Strangs 2 und nach den Druckverhältnissen außen und innen, insbesondere während des Verfahrensschritts d), wie in Fig. 5b und Fig. 5c dargestellt, in dem das Leerrohr geflutet ist, sowie nach den thermischen Anforderungen und den Korrosionsschutzanforderungen an das Leerrohrmaterial.
Fig. 1c einen schematischen Schnitt durch ein mit Teilquerschnitt geflutetes Leerrohr 1.
Fig. 2a einen schematischen Schnitt durch ein Kabel 3, beispielhaft für ein Kabel oder Medienrohr oder Zugseil oder eine andere Nutzlast.
Fig. 2b einen schematischen Schnitt durch einen Nutzlast-Transportrohr-Strang 2, in dem das Kabel 3, beispielhaft für ein Kabel oder Medienrohr oder Zugseil oder eine andere Nutzlast, ohne Kabelfixierung dargestellt ist.
Fig. 2c einen schematischen Schnitt durch einen Nutzlast-Transportrohr-Strang 2, in dem ein Medienrohr als Nutzlast dargestellt ist.
Fig. 2d einen schematischen Schnitt durch einen Nutzlast-Transportrohr-Strang 2, in dem das Kabel 3, beispielhaft für ein Kabel oder Medienrohr oder Zugseil oder eine andere Nutzlast, außerhalb des Transportrohrs fixiert (Bezugszeichen 8) dargestellt ist.
Fig. 3a einen schematischen Schnitt durch ein Leerrohr-Nutzlast-Transportrohr-System in einem Zustand, in dem das Verhältnis von Gewicht (Transportrohr und Nutzlast) zu Auftrieb, G/A = 1 ist.
Fig. 3b einen schematischen Schnitt durch ein Leerrohr-Nutzlast-Transportrohr-System in einem Zustand, in dem das Verhältnis von Gewicht (Transportrohr und Nutzlast) zu Auftrieb, G/A < 1 ist.
Fig. 3c einen schematischen Schnitt durch ein Leerrohr- Nutzlast-Transportrohr-System in einem Zustand, in dem das Verhältnis von Gewicht (Transportrohr und Nutzlast) zu Auftrieb, G/A > 1 ist.
Fig. 4a einen schematischen Schnitt durch einen Nutzlast-Transportrohr-Strang 2 mit beispielhafter Kabelfixierung bzw. Kabelzentrierung 6.
Fig. 4b einen schematischen Schnitt durch einen Nutzlast-Transportrohr-Strang, in dem das Kabel 3, beispielhaft für ein Kabel oder Medienrohr oder Zugseil oder eine andere Nutzlast, mit einer Kabelfixierung bzw. Kabelzentrierung 6 dargestellt ist.
Fig. 4c einen schematischen Längs- und Querschnitt durch einen Nutzlast-Transportrohr-Strang, in dem das Kabel 3, beispielhaft für ein Kabel oder Medienrohr oder Zugseil oder eine andere Nutzlast, mit einer Kabelfixierung bzw. Kabelzentrierung 6, sowie mit zusätzlichem Medienrohrsystem, welches in Mehrfachfunktion genutzt werden kann, vorteilhafterweise hier auch als Ballastmediumrohr 7 mit Ausblasrohr 11 dargestellt.
Fig. 4d einen schematischen Schnitt durch einen Nutzlast-Transportrohr-Strang, in dem beispielhaft zwei Kabel 3 oder Medienrohre, mit einer Kabelfixierung bzw. Kabelzentrierung 6 dargestellt sind.

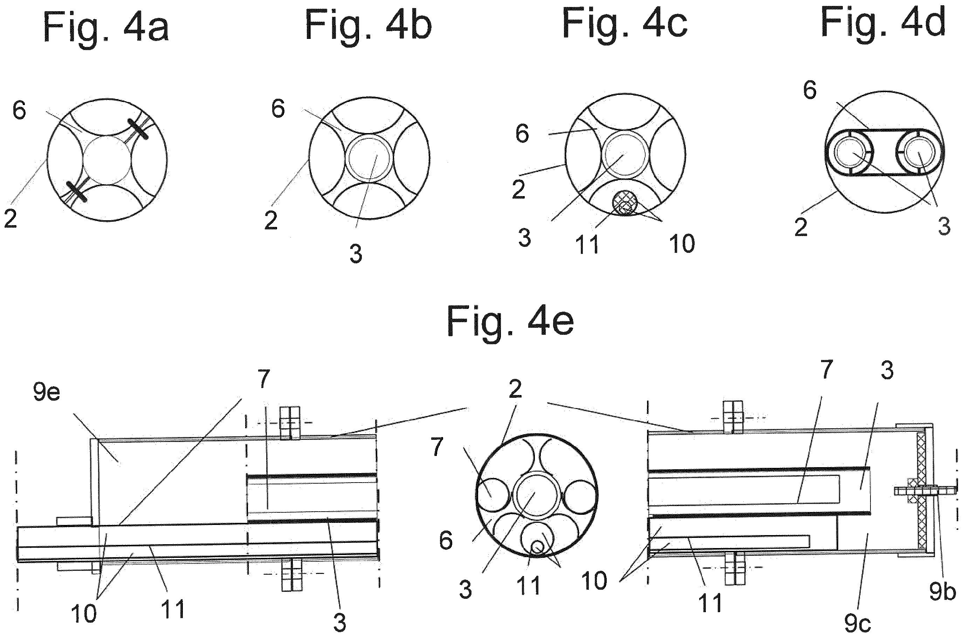

Fig. 4e einen schematischen Längs- und Querschnitt durch einen Nutzlast-Transportrohr-Strang, ähnlich Fig. 4c, in dem das Kabel 3, beispielhaft für eine Nutzlast oder ein Medienrohr, in einer weiteren Ausgestaltung der Kabelfixierung bzw. Kabelzentrierung dargestellt ist, welche als Durchgangsfixierung 7 ausgeführt ist und im Nutzlast-Transportrohr-Strang 2 selbst als Kabelleerrohrsystem 3. Ordnung oder als Medienrohrsystem in Mehrfachfunktion genutzt werden kann. Die Kabelfixierungs- bzw. Kabelzentrierungsrohre 7 können in dieser Ausgestaltung als Durchgangsrohr erfindungsgemäß bereits in Verfahrensschritt c) und/oder d) zur Ein- und Ausspeisung von Ballastmedien 10 verwendet werden und dazu im Bereich des Endkopfes 9d des Nutzlast-Transportrohr-Strangs, wie beispielhaft dargestellt, mit einem Anschluss für die Ballastmediumzufuhr versehen werden. Ein so genanntes Ausblasrohr 11, hier beispielhaft innenliegend dargestellt, ermöglicht die Ein- und Ausspeisung des Ballastmediums 10.
Fig. 5a einen schematischen Schnitt durch einen Leerrohrgraben, beispielhaft ausgeführt in Verfahrensschritt a) des erfindungsgemäßen Verfahrens mit Böschung 4a oder im Grabenverbau 4b, mit Leerrohr 1, in dem beispielhaft zusätzlich ein Montageseil 9a mit verlegt ist, beispielsweise für das spätere Einziehen eines Zugseils 9b, wobei die Bettung und Wiederverfüllung nach dem Stand der Technik erfolgen und nach den Spezifikationen bzgl. den thermischen Anforderungen an das Bettungs- 5a und Verfüllmaterial 5b und 5c.
Fig. 5b einen schematischen Schnitt durch ein verlegtes Leerrohr 1 zu Beginn des Verfahrensschritts d) des erfindungsgemäßen Verfahrens mit geflutetem Leerrohr inkl. Zugseil 9b welches selbst mit dem auftriebsgestützten Verfahren vor Einführen bzw. Einziehen des Nutzlast-Transportrohr-Strangs verlegt worden ist.
Fig. 5c einen schematischen Schnitt durch ein verlegtes, geflutetes Leerrohr 1 in Verfahrensschritt d) des erfindungsgemäßen Verfahrens während des Einführens bzw. Einziehens eines Nutzlast-Transportrohr-Strangs 2 mit innenliegendem Kabel 3 als Nutzlast; welches sich vor Erreichen der Zielposition auftriebsgestützt gehoben hat, hier beispielhaft derart, dass Auftrieb A und Gewicht G gleich groß sind.
Fig. 5d einen schematischen Schnitt durch ein verlegtes Leerrohr 1 am Ende des Verfahrensschritts d) des erfindungsgemäßen Verfahrens nach Einführen bzw. Einziehen des Nutzlast-Transportrohr-Strangs 2 mit innenliegendem Kabel 3 als Nutzlast, welches sich nach Erreichen der Zielposition und nach Entleerung des Leerrohrs 1 gewichtsbedingt und ohne wirksamen Auftrieb abgesenkt hat.

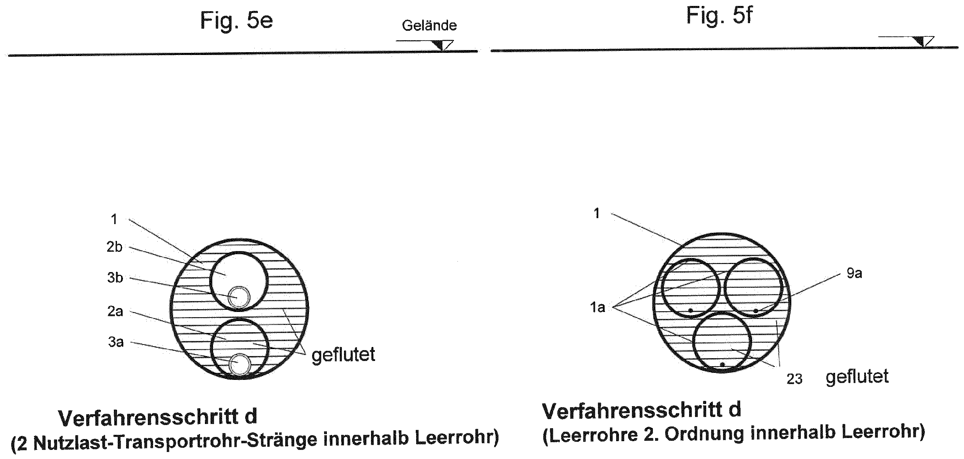

Fig. 5e einen schematischen Schnitt durch ein verlegtes geflutetes Leerrohr 1, in der Darstellung eines sich wiederholenden Verfahrensschritts d, mit einem bereits verlegten ebenfalls gefluteten und dadurch abgesenkten Nutzlast-Transportrohr-Strang 2a, und mit einem weiteren Nutzlast-Transportrohr-Strang 2b mit innenliegendem Kabel 3b als Nutzlast; auftriebsgestützt oberhalb des Nutzlast-Transportrohr-Strangs 2a, ähnlich wie im Längsschnitt in Fig. 6d dargestellt.
Fig. 5f einen schematischen Schnitt durch ein verlegtes Leerrohr 1 im noch gefluteten Zustand, mit Leerrohren 2. Ordnung 1a, die ebenfalls nach dem erfindungsgemäßen Verfahren verlegt wurden und ihrerseits für das Einführen von Nutzlast-Transportrohr-Strängen geeignet sind, wobei es für das erfindungsgemäße Verfahren unerheblich ist, ob mehrere Leerrohre 1a oder Nutzlast-Transportrohr-Stränge nacheinander oder gleichzeitig montiert werden.

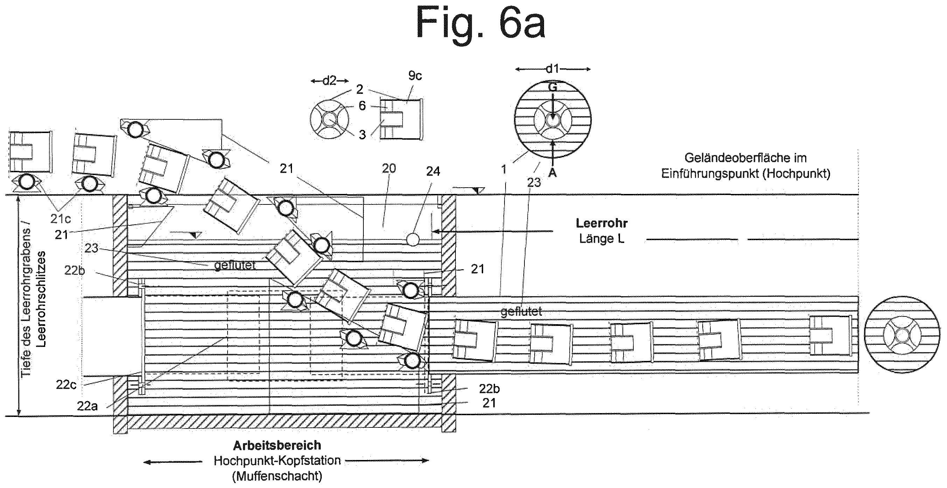

Fig. 6a einen schematischen Längsschnitt durch einen verfüllten bzw. geschlossenen Leerrohrgraben mit verlegtem Leerrohr 1 im Bereich der so genannten Hochpunkt-Kopfstation 20, in dem das erfindungsgemäße Einführungsverfahren in Verfahrensschritt d) schrittweise durch Mehrfachabbildung eines Verschlusskopfes 9c eines Nutzlast-Transportrohr-Strangs 2 dargestellt ist. Die Einführung des Nutzlast-Transportrohr-Strangs 2 inkl. Kabel 3 als Nutzlast in das geflutete Leerrohr 1 erfolgt über beispielhaft dargestellte Einführungsvorrichtungen 21, sowie mittels spezieller Führungsrollen 21c. Eine Überlauf- und Einspeisevorrichtung 24 wird vorzugsweise über den Schachtüberlauf der Hochpunkt-Kopfstation 20 angeschlossen. Die zum Zwecke der Lastabtragung und Rohrführung installierten Einführungsvorrichtungen 21 und Führungsrollen 21c werden vorzugsweise nach der abschließenden Entleerung des Leerrohres 1 wieder demontiert und können an anderer Stelle gleichermaßen wiederverwendet werden. Die Leerrohrabschnitte, die vorteilhafterweise innerhalb der Hochpunkt-Kopfstation 20 mit je einem Gegenflansch 22b versehen sind, wie beispielhaft dargestellt, können vorteilhafterweise mittels Rohrausbaustücken 22a durchgängig und dicht im Schacht der Hochpunkt-Kopfstation 20 verbunden werden. Die Rohrausbaustücke 22a können vorteilhafterweise mit Anschlüssen für Überwachungseinrichtungen ausgestattet werden, die hier nicht dargestellt sind. Vor einer Flutung des Leerrohres 1 und der Hochpunkt-Kopfstation 20 mit dem Auftriebsmedium 23 in Verfahrensschritt d) des erfindungsgemäßen Verfahrens, wird das nicht betroffene Leerrohrende innerhalb der Hochpunkt-Kopfstation 20 vorteilhafterweise mit einer Rohrkappe 22c oder dergleichen verschlossen.

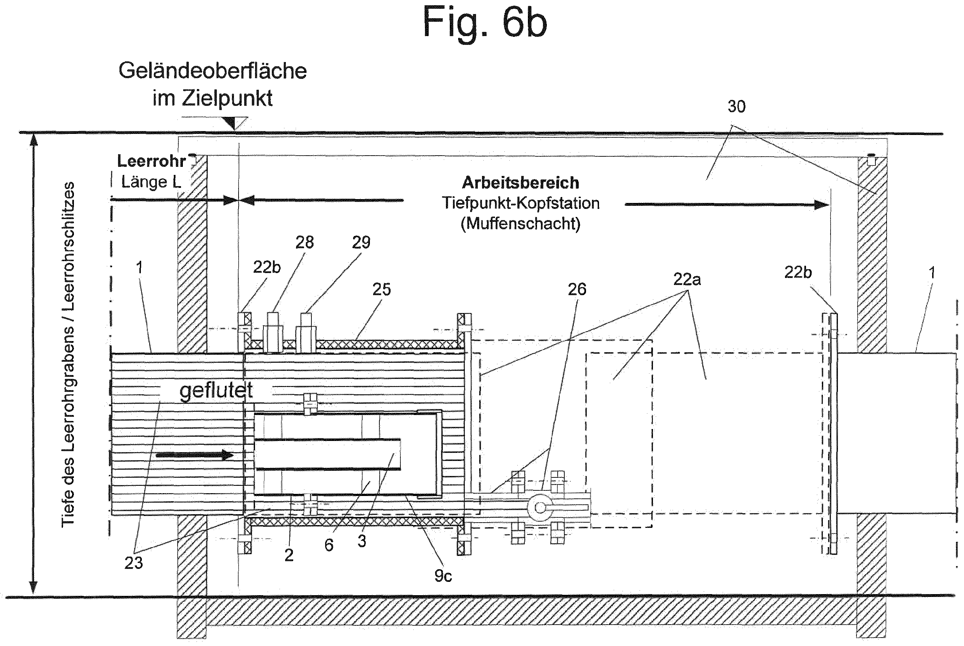

Fig. 6b einen schematischen Längsschnitt durch einen verfüllten bzw. geschlossenen Leerrohrgraben mit verlegtem Leerrohr 1 im Bereich der so genannten Tiefpunkt-Kopfstation 30 des gefluteten Leerrohres zum Zwecke der Durchführung des erfindungsgemäßen Verfahrens in Verfahrensschritt d) dargestellt bei Erreichen der Zielposition eines Nutzlast-Transportrohr-Strangs mit Verschlusskopf 9c ohne Zugvorrichtung, mit einen schematischen Schnitt durch die erfindungsgemäße Tiefpunktverschlussvorrichtung, wie beispielhaft dargestellt als Montage-Flanschenrohr 25 welches vorzugsweise mehrere Funktion und Forderungen erfüllen kann und dazu mit beispielhaften Vorrichtungen ausgestattet ist:
   - Verschluss des Leerrohres gegen den Druck des mit dem Auftriebsmedium 23 gefluteten Leerrohres 1;
   - Befüllungsstutzen 28 für Auftriebsmedium, (z. B. Wasser, oder Medien mit höherer Dichte);
   - Anschlussstutzen 29 für Druckluft und sekundäres Auftriebsmedium;
   - kombinierter Entleerungs- und Füllstutzen mit Absperrarmatur 26 als Grundablass, wobei 28 und 29 in einer nicht dargestellten Ausführung in den Grundablass 26 integriert ausgeführt werden können; und/oder
   - Druckmessung bzw. Füllstandüberwachung (hier nicht dargestellt).

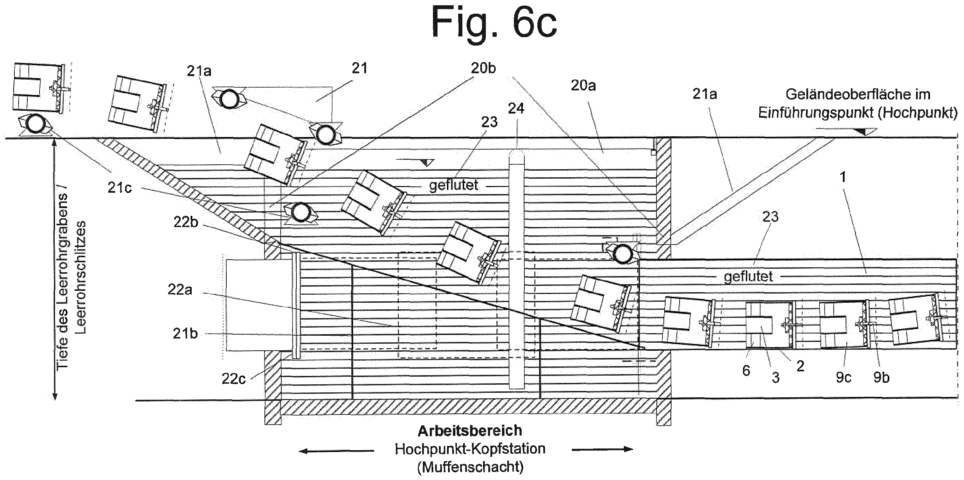

Fig. 6c einen schematischen Längsschnitt durch einen verfüllten bzw. geschlossenen Leerrohrgraben mit verlegtem Leerrohr 1 im Bereich der so genannten Hochpunkt-Kopfstation 20a in dem das erfindungsgemäße Einführungsverfahren ähnlich wie in Fig. 6a dargestellt ist. Diese beispielhafte erfindungsgemäße Ausgestaltung des Muffenschachtes bzw. der Hochpunkt-Kopfstation 20a erleichtert die Einführung des Nutzlast-Transportrohr-Strangs 2 inkl. Kabel 3 als Nutzlast in das geflutete Leerrohr 1 über eine beispielhaft dargestellte erfindungsgemäße Einführungsvorrichtung 21a, welche seitlich außerhalb am Muffenschacht, als Bestandteil des Schachts oder als Montagehilfe ansetzt und ggf. im Schacht mit einer Einführungshilfsvorrichtung 21b ergänzt ist. Diese beispielhafte Ausführung erlaubt im Bereich der Hochpunkt-Kopfstation 20a während des Einführvorgangs größere Biegeradien des Nutzlast-Transportrohr-Strangs 2 inkl. Kabel 3, mit entsprechend geringeren Umlenkkräften und Materialbeanspruchungen. Die beispielhafte Ausgestaltung der Hochpunkt-Kopfstation 20a sieht vor, die seitlichen Wände bereits bauseitig mit entsprechenden Aussparungen 20b bzw. mit Fertigteilen 20b als ausbaubare Wandverschlüsse 20b auszustatten. Ggf. können die Enden eines Leerrohrstranges, in welches der Nutzlast-Transportrohr-Strang 2 eingeführt werden soll, auch zu einem späteren Zeitpunkt, z. B. nach Beendigung des Verfahrensschritts d) des erfindungsgemäßen Verfahrens mit Gegenflanschen 22b für die Rohrausbaustücke 22a versehen werden, mit denen die beidseitigen Leerrohrstränge, die vorteilhafterweise dazu mit je einem Gegenflansch 22b versehen werden, vorteilhafterweise wie dargestellt durchgängig und dicht im Schacht der Hochpunkt-Kopfstation 20a verbunden werden. Die Rohrausbaustücke 22a werden vorteilhafterweise mit Anschlüssen für Überwachungseinrichtungen oder mit Anschlüssen für die Zu- und Ableitung von z. B. Kühlmedien u. a. ausgestattet, die hier nicht dargestellt sind. Vor einer Flutung des gesamten Schachtes mit dem Auftriebsmedium 23 in Verfahrensschritt d) des erfindungsgemäßen Verfahrens wird das nicht betroffene Leerrohrende im Muffenschacht vorteilhafterweise mit einer Rohrkappe 22c oder dergleichen verschlossen.

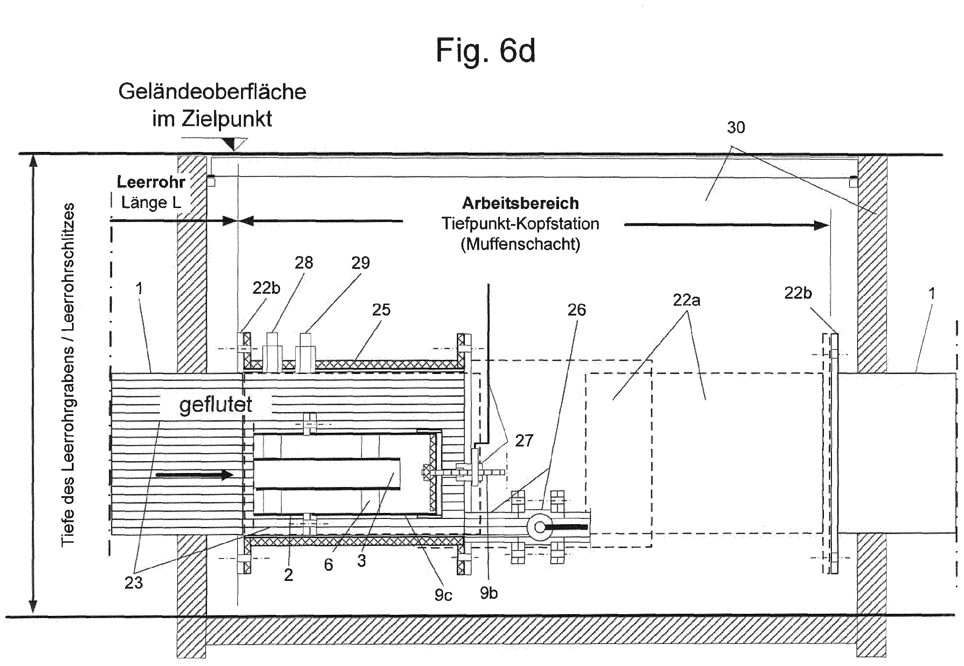

Fig. 6d einen schematischen Längsschnitt durch einen verfüllten bzw. geschlossenen Leerrohrgraben mit verlegtem Leerrohr 1 im Bereich der so genannten Tiefpunkt-Kopfstation 30 des gefluteten Leerrohres zum Zwecke der Durchführung des erfindungsgemäßen Verfahrens in Verfahrensschritt d) dargestellt bei Erreichen der Zielposition eines Nutzlast-Transportrohr-Strangs 2 mit Verschlusskopf 9c, wie in Fig. 6b dargestellt, jedoch ausgebildet als Verschlusskopf 9c mit Zugvorrichtung 9b als sogenannten Zugkopf, und in der Ausgestaltung der Tiefpunktverschlussvorrichtung das Montage-Flanschenrohrs 25 zusätzlich mit einer Dichtungsvorrichtung 27, beispielsweise als Stoffbuchse mit Spannelement oder als Gleitringdichtung ggf. mit Anschluss eines Sekundärmediums, zum Zwecke des leckagearmen Durchziehens einer Zugvorrichtung 9b, beispielsweise. eines Zugseils.

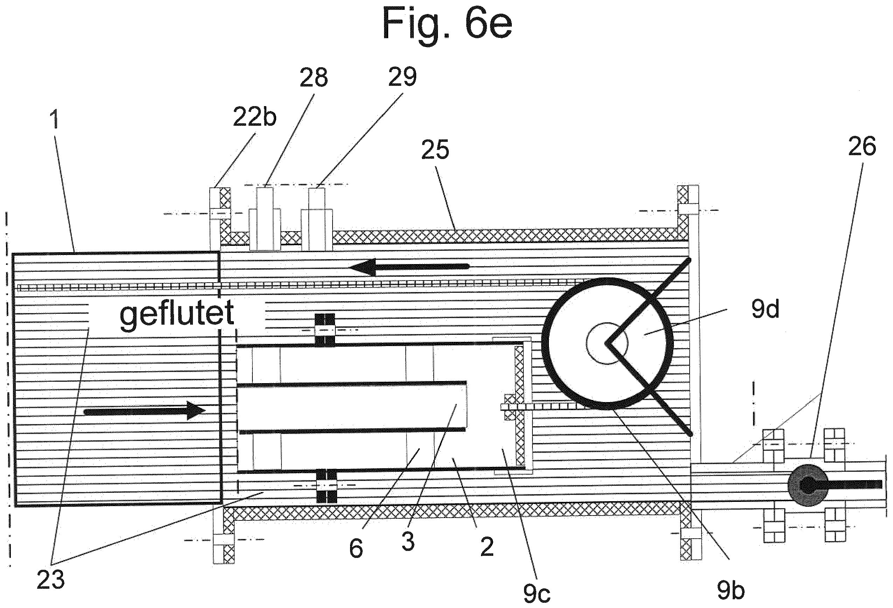

Fig. 6e einen schematischen Längsschnitt durch die erfindungsgemäße Tiefpunktverschlussvorrichtung zum Zwecke der Durchführung des erfindungsgemäßen Verfahrens in Verfahrensschritt d) mit einem Montage-Flanschenrohr 25, ähnlich wie in Fig. 6d dargestellt, jedoch mit einer innenliegenden Umlenkrolle 9d, mit der beispielsweise ein Zugseil 9b zur Übertragung der Zugkraft innerhalb des Leerrohres rückgeführt werden kann.

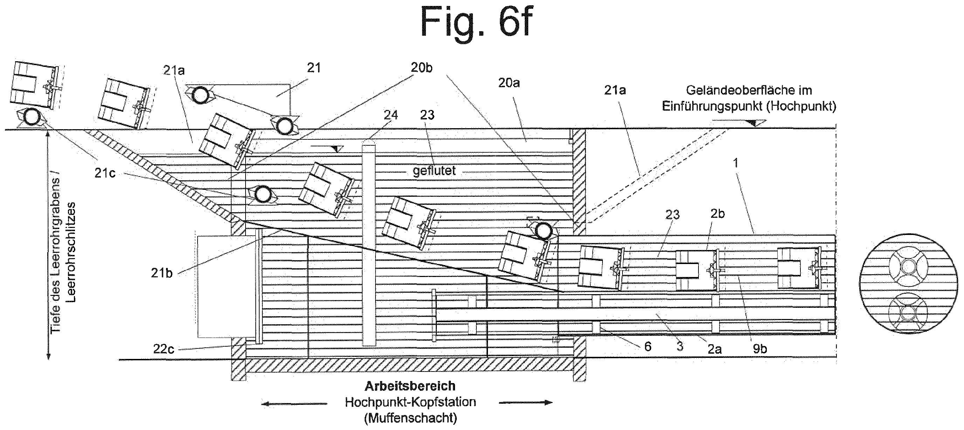

Fig. 6f einen schematischen Längsschnitt durch einen verfüllten bzw. geschlossenen Leerrohrgraben mit verlegtem Leerrohr 1 im Bereich der so genannten Hochpunkt-Kopfstation 20a in dem das erfindungsgemäße Einführungsverfahren ähnlich wie in Fig. 6c dargestellt ist, jedoch in der Phase in der ein zweiter Nutzlast-Transportrohr-Strang 2a in das geflutete Leerrohr 1 über eine beispielhaft dargestellte erfindungsgemäße Einführungsvorrichtung 21a und anschließend oberhalb eines bereits verlegten und gefluteten und damit abgesenkten Nutzlast-Transportrohr-Strangs 2a gemäß dem erfindungsgemäßen Verfahren eingeführt wird.

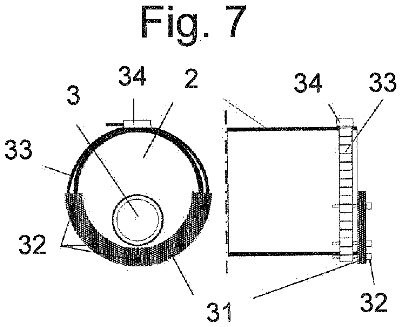

Fig. 7 zwei Ansichten schematisch den Aufbau und Einsatz einer so genannten Gleitmatte 31 für den Teilprozess des schussweisen Aufbaus des Nutzlast-Transportrohr-Strangs 2 in Verfahrensschritt c) des erfindungsgemäßen Verfahrens. Die Gleitmatte ist wie dargestellt mit Bund und Bohrungen ausgeführt, durch die die Sicherungselemente 32 geführt werden. Über den Umfang des jeweils zu verziehenden Transportrohrschusses wird die Gleitmatte vorzugsweise mit der Spannvorrichtung 34 und dem Spanngurt 33 gesichert und entsichert.

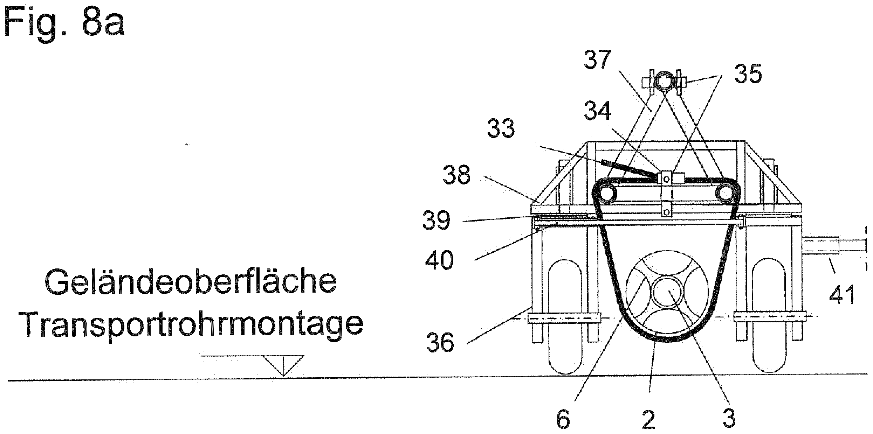

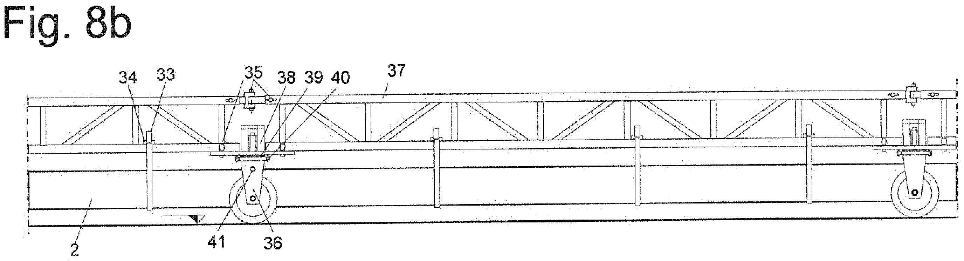

Fig. 8a einen schematische Schnitt durch einen Lenk- und Führungspunkt eines erfindungsgemäßen nicht schienengebundenen verfahrbaren Gelenkzugs zur Aufnahme der Traglasten und zur Richtungskontrolle für den Längstransport des Nutzlast-Transportrohr-Strangs 2 und Fig. 8b eine schematische Ansicht eines Teilabschnitts eines nicht schienengebundenen verfahrbaren Gelenkzugs mit befestigter Nutzlast (Nutzlast-Transportrohr-Strang 2, bestehend vorzugsweise im wesentlichen aus einem Fahrgestell mit 2 drehbar gelagerten Radsystemen 36 mit Drehschemel 39 und Querlenker 40, sowie der Auflagevorrichtung 38 zur Aufnahme und Fixierung der Transporttraversen 37 als bevorzugte Vorrichtung für den Längstransport (Zuführungsverfahren) im Verfahrensschritt d) des erfindungsgemäßen Verfahrens. Vorzugsweise wird mittels geeigneter Baufahrzeuge, Baumaschinen oder Seilwinden der Vorschub übertragen und für den Längstransport des Nutzlast-Transportrohr-Strangs in Richtung Einführungsvorrichtung 21 der Hochpunkt-Kopfstation 20, 20a bzw. bis zum Erreichen der Zielposition des Nutzlast-Transportrohr-Strangs in der Tiefpunkt-Kopfstation 30 geleistet und dabei die Richtungskontrolle mittels Lenkhilfe 41, die beispielsweise seitlich oder in Fahrtrichtung am Fahrgestell montiert werden kann, sichergestellt. Sonderausführungen, die hier nicht dargestellt sind, können zusätzlich beispielsweise Antriebe zur Fortbewegung, Förderbänder oder Rollengänge oder Schienenführungen aufweisen, die den beschriebenen Ablauf im Verfahrensschritt d) des erfindungsgemäßen Verfahrens unterstützen, bzw. ermöglichen.

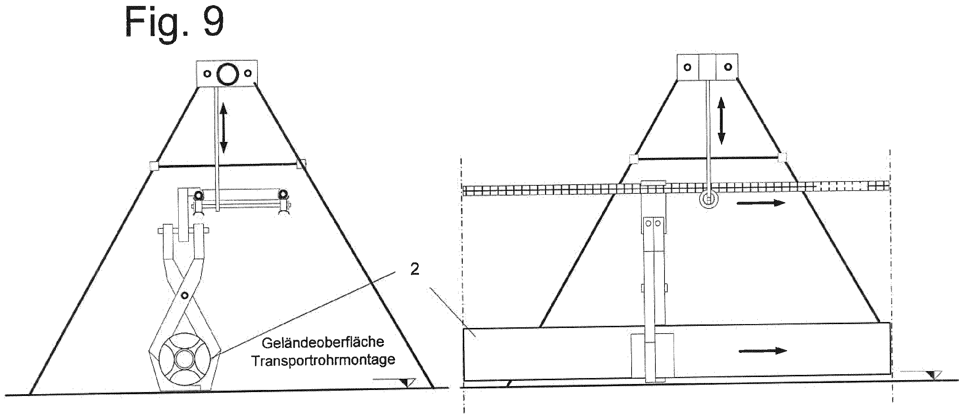

Fig. 9 eine schematische Ansicht eines vormontierten Nutzlast-Transportrohr-Strangs, der beispielhaft mittels einer Art Schlepplift bzw. Traglift der Einführungsvorrichtung 21 zugeführt zu werden kann. Solche Vorrichtungen werden zweckmäßigerweise dann eingesetzt, wenn beispielsweise der Untergrund den Zuführungstransport des vormontierten Transportrohrstrangs gemäß Fig. 8a und Fig. 8b nicht zulässt.

Die in den Figuren der Zeichnung dargestellten Ausführungsbeispiele der Erfindung und die im Zusammenhang mit diesen beschriebenen Ausführungsbeispiele der Erfindung dienen lediglich der Erläuterung der Erfindung und sind für diese nicht beschränkend.

### Bezugszeichenliste:

- 1: Leerrohr
- 1a: Leerrohr 2. Ordnung
- 2: Transportrohr bzw. Nutzlast-Transportrohr-Strang
- 2a: Nutzlast-Transportrohr-Strang 1
- 2b: Nutzlast-Transportrohr-Strang 2
- 3: Kabel oder Medienrohr oder sonstige Nutzlast, wie Zugseile oder Leerrohre 3. Ordnung
- 3a: Kabel oder Medienrohr 1
- 3b: Kabel oder Medienrohr 2
- 4a: Böschungswände eines Leerrohrgrabens
- 4b: Seitenwände eines Leerrohrgrabens bzw. eines Grabenschlitzes der standfest ist oder in Verbindung mit Maßnahmen zum Grabenverbau
- 5a: Schicht 1 Bettungsmaterial im Leerrohrgraben
- 5b: Schicht 2 Füllmaterial im Leerrohrgraben
- 5c: Graben Füllmaterial oberhalb 5b
- 6: Kabelfixierung bzw. Kabelzentrierung
- 7: Kabelfixierung bzw. Kabelzentrierung in der Ausgestaltung als Kabelleerrohrsystem 3. Ordnung oder Medienrohrsystem mit Mehrfachfunktion, insbesondere als Ballastrohr zur Ein- und Ausspeisung von Ballastmedien
- 8: Fixierung für Kabel oder Medienrohr oder Zugseile oder andere Nutzlasten außerhalb des Transportrohrs
- 9a: Montageseil
- 9b: Zugvorrichtung (Zugseil)
- 9c: Verschlusskopf eines Nutzlast-Transportrohr-Strangs (ohne Zugeinrichtung oder mit Zugvorrichtung als Zugkopf ausgebildet)
- 9d: Zugseilumlenkrolle
- 9e: Endstrang des Nutzlast-Transportrohr-Strangs (Langrohrausführung)
- 10: Ballastmedium (geführt in (7) und (11))
- 11: Ausblasrohr
- 20: Hochpunkt-Kopfstation (Muffenschacht) Ausführung gem. Fig. 6a
- 20a: Hochpunkt-Kopfstation (Muffenschacht) Ausführung gem. Fig. 6c und Fig. 6f
- 20b: Aussparung bzw. Fertigteil mit ausbaubarem Wandverschluss
- 21: Einführungsvorrichtung (flutbar)
- 21a: Einführungsvorrichtung, welche seitlich außerhalb am Muffenschacht ansetzt
- 21b: Einführungshilfsvorrichtung
- 21c: Führungsrollen oder Umlenkrollen in der erfindungsgemäßen Ausgestaltung federbelastet oder höhenverstellbar mit Anlaufvorrichtung
- 22a: Rohrausbaustück in Flansch- oder Muffenausführung
- 22b: Leerrohr Gegenflansch
- 22c: Leerrohr Rohrkappe
- 23: Auftriebsmedium als Montagemedium
- 24: Überlauf- und Einspeisevorrichtung
- 25: Montage-Flanschenrohr (multifunktionaler Montageverschluss als Tiefpunktverschlussvorrichtung innerhalb der Tiefpunkt-Kopfstation)
- 26: Entleerungsstutzen mit Absperrarmatur (Grundablass)
- 27: Dichtungsvorrichtung für Zugseil (9b), z. B. ausgeführt als Stoffbuchse mit Spannelement oder als Gleitringdichtung, ggf. mit Anschluss eines Sekundärmediums
- 28: Befüllungsstutzen für Auftriebsmedium (23)
- 29: Anschlussstutzen für Druckluft (sekundäres Auftriebsmedium)
- 30: Tiefpunkt-Kopfstation (Muffenschacht)
- 31: Gleitmatte
- 32: Sicherungselemente
- 33: Spanngurt
- 34: Spannvorrichtung
- 35: Bolzen mit Bolzensicherung
- 36: Fahrgestell mit drehbar gelagertem Radsystem
- 37: Transporttraverse
- 38: Auflagevorrichtung zur Aufnahme und Fixierung der Rohrtraversen (37)
- 39: Drehschemel (z. B. ausgeführt mit Axiallager oder Lenkkranz)
- 40: Querlenker
- 41: Lenkhilfe
- A: Auftrieb (z. B. angegeben in kg/m)
- d1: Leerrohrdurchmesser
- d2: Transportrohrdurchmesser
- G: Gewicht (z. B. angegeben in kg/m)

## Patentansprüche

1. Verfahren zur aktiven Kühlung von Kabeln mit gasförmigen oder flüssigen Kühlmedien, bei dem die Kabel auftriebsgestützt montiert oder verlegt sind, wobei
a) mindestens ein Leerrohr (1) verlegt oder bereitgestellt wird, dessen Innendurchmesser (d1) größer ist als der Außendurchmesser (d2) eines Nutzlast-Transportrohr-Strangs (2); und
b) im Bereich des Leerrohrverlaufs mindestens eine Hochpunkt-Kopfstation (20, 20a) und mindestens eine Tiefpunkt-Kopfstation (30) errichtet oder bereitgestellt werden und auf diese Weise Zugänge in einem Leerrohrsystem bereitgestellt werden; und
c) mindestens ein aktives Vorschubsystem bereitstellt wird und mindestens ein Nutzlast-Transportrohr-Strang (2) außerhalb des Leerrohres (1) vormontiert wird; und
d) mit Hilfe des aktiven Vorschubsystems der Nutzlast-Transportrohr-Strang (2) über die Hochpunkt-Kopfstation (20, 20a) eingeführt und bis zu einer Tiefpunkt-Kopfstation (30) am Zielort innerhalb des Leerrohrsystems transportiert und positioniert wird und dazu das Leerrohrsystem durch die Verwendung mindestens eines primären Auftriebsmediums (23) geflutet wird,
wobei der Nutzlast-Transportrohr-Strang (2) im Außendurchmesser (d2) auf den notwendigen und gewünschten wirksamen Auftrieb (A) abgestimmt ist, der in dem Auftriebsmedium (23) mit bekannter Dichte auf den dazu geschlossenen Nutzlast-Transportrohr-Strang (2) wirkt, um beim Transport und der Positionierung des Nutzlast-Transportrohr-Strangs (2) innerhalb des Leerrohrsystems dem jeweiligen Gewicht (G) des Nutzlast-Transportrohr-Strangs (2) entgegenzuwirken, und wobei der Nutzlast-Transportrohr-Strang (2) die Funktion eines Trägerrohrs erfüllt, in welchem ein zu verlegendes Kabel (3) oder eine zu verlegende Nutzlast platziert ist und somit ein Nutzlast-Transportrohr-System entsteht, welches, wenn es anschließend dicht verschlossen worden ist, auftriebsbedingt die Forderung einer reibungs- und widerstandsarmen Verlegung in dem mit mindestens dem Auftriebsmedium (23) gefluteten Leerrohr (1) erfüllt, **dadurch gekennzeichnet, dass** die Dichte des Auftriebsmediums (23) durch Zusätze oder Austausch und somit das Auftriebsverhalten auch während des Montagevorgangs veränderbar ist, und
wobei das Leerrohr (1) und/oder der Nutzlast-Transportrohr-Strang (2) ferner zur Nutzung als Medienrohr durch die Zu- und Ableitung von Kühlmedien zum Zwecke der aktiven Kühlung vorgesehen sind und genutzt werden.

2. Verfahren nach Anspruch 1, **dadurch gekennzeichnet, dass** zur Wirkungsgradverbesserung eine Nutzung von Abwärme, welche insbesondere durch die bei der Übertragung von Strom verursachte Verlustleistung in Form von Übertragungsverlusten entsteht, erfolgt.

3. Verfahren nach Anspruch 1 oder Anspruch 2, **dadurch gekennzeichnet, dass** für die Zuführung von Ballastmedien (10) ein Ballastrohr (7) mit einem Ausblasrohr (11) vorgesehen ist.

4. Verfahren nach einem der Ansprüche 1 bis 3, **dadurch gekennzeichnet, dass** im Verfahrensschritt c) für die Herstellung des jeweiligen Nutzlast-Transportrohr-Strangs (2) zunächst ein Kabel (3) oder eine Nutzlast außerhalb des Leerrohres (1) in der vorgesehene Länge ausgelegt oder zusammengestellt wird und dass anschließend schussweise, die Transportrohrschüsse auf das Kabel (3) aufgezogen, gleichzeitig Kabelfixierungen oder Kabelzentrierungen (7) montiert werden und anschließend die Transportrohrschüsse dicht verbunden werden.

5. Verfahren nach einem der Ansprüche 1 bis 4, **dadurch gekennzeichnet, dass** im Verfahrensschritt c) für die Herstellung des jeweiligen Nutzlast-Transportrohr-Strangs (2) die Kabelfixierungen oder Kabelzentrierungen (7) auch als durchgehende Kabelfixierungs- und Medienrohre (7) ausgebildet sind, die als Ballastrohre (7) zur Aufnahme eines Ballastmediums (10) geeignet sind.

6. Verfahren nach einem der Ansprüche 1 bis 5, **dadurch gekennzeichnet, dass** der das Kabel umhüllende Nutzlast-Transportrohr-Strang (2) nach Fertigstellung dicht verschlossen wird und dazu mit einem demontierbaren und wiederverwendbaren Verschlusskopf (9c) ausgestattet wird.

7. Verfahren nach einem der Ansprüche 1 bis 6, **dadurch gekennzeichnet, dass** für die technische Umsetzung im Verfahrensschritt d) innerhalb einer Tiefpunkt-Kopfstation (30) Vorrichtungen für Montagezwecke verwendet werden, wobei innerhalb der Tiefpunkt-Kopfstation (30) eine Tiefpunktverschlussvorrichtung (25) vorgesehen ist, die das unter dem Druck des Auftriebsmediums (23) stehende geflutete Leerrohr (1) annähernd dicht verschließt.

8. Verfahren nach einem der Ansprüche 1 bis 7, **dadurch gekennzeichnet, dass** die Tiefpunktverschlussvorrichtung innerhalb der Tiefpunkt-Kopfstation (30) als ein Montage-Ausbaustück ausgeführt ist, welches mit dem Leerrohr (1) verbunden ist.

9. Verfahren nach einem der Ansprüche 1 bis 8, **dadurch gekennzeichnet, dass** das Montage-Ausbaustück als multifunktionales Montage-Flanschenrohr (25) ausgeführt ist.

10. Verfahren nach einem der Ansprüche 1 bis 9, **dadurch gekennzeichnet, dass** die Tiefpunktverschlussvorrichtung mindestens eine gegen den Druck des Auftriebsmediums (23) abdichtbare Vorrichtung (27) zur Durchführung einer Zugvorrichtung (9b) aufweist.

11. Verfahren nach einem der Ansprüche 1 bis 10, **dadurch gekennzeichnet, dass** geeignete existierende Leerrohrsysteme verwendet werden, die die Voraussetzungen für die weitergehende Ausführung eines Verfahrens nach einem der Ansprüche 1 bis 10 zur aktiven Kühlung von Kabeln mit gasförmigen oder flüssigen Kühlmedien, bei dem die Kabel auftriebsgestützt montiert oder verlegt sind, erfüllen.

## Claims

1. A method for actively cooling cables by means of gaseous or liquid cooling media, in which method the cables are installed or laid in a buoyancy-based manner, wherein
a) at least one empty tube (1) is laid or provided, the inner diameter of which (d1) is greater than the outer diameter (d2) of a payload transport tube string (2); and
b) at least one high point head-end station (20, 20a) and at least one low point head-end station (30) will be established or provided in the area of the empty tube run and in this manner accesses to an empty tube system will be provided; and
c) at least one active feed system will be provided and at least one payload transport tube string (2) will be pre-installed outside the empty tube (1); and
d) the payload transport tube string (2) will be introduced via the high point head-end station (20, 20a) by means of the active feed system and transported inside the empty tube system to a low point head-end station (30) at the target location and positioned there and for this purpose the empty tube system will be flooded by using at least one primary lifting medium (23),
wherein the outer diameter (d2) of the payload transport tube string (2) is adapted to the required and desired effective buoyancy (A) which acts in the lifting medium (23) having a known density upon the payload transport tube string (2) closed for this purpose, in order to counteract the respective weight (G) of the payload transport tube string (2) during the transport and positioning of the payload transport tube string (2) inside the empty tube system,
and wherein the payload transport tube string fulfills the function of a carrier tube, in which a cable (3) to be laid or a payload to be laid is placed and thus a payload transport tube system is created, which, if it has been closed tightly afterwards, will meet the demand of a low-friction and low-resistance laying thanks to lifting forces in the empty tube (1) that has been flooded with at least the lifting medium (23);
**characterized in that**
the density of the lifting medium (23) can be modified by additives or replacement and thus the lifting behaviour can be changed also during the installation operation, and
wherein the empty tube (1) and/or the payload transport tube string (2) are furthermore provided and used as media tubes supplying and discharging cooling media for the purpose of the active cooling.

2. A method according to claim 1, **characterized in that** for improving the effectiveness, waste heat produced in particular by the power dissipation in form of transmission losses caused during the transmission of electricity will be used.

3. A method according to claim 1 or claim 2, **characterized in that** a ballast tube (7) with an exhaust pipe (11) is provided for supplying ballast media (10).

4. A method according to one of the claims 1 to 3, **characterized in that** in process step c) at first the predefined length of a cable (3) or a payload will be laid out or composed outside the empty tube (1) for creating the respective payload transport tube string (2) and then afterwards the transport tube lengths will be drawn on the cable (3) in sections and then the transport tube lengths will be tightly connected.

5. A method according to one of the claims 1 to 4, **characterized in that** in process step c) where the respective payload transport tube string (2) is produced, the cable fixing devices or cable centering devices (7) are also designed as continuous cable fixing tubes and media tubes (7) which are suitable for being used as ballast tubes (7) for receiving a ballast medium (10).

6. A method according to one of the claims 1 to 5, **characterized in that** the payload transport tube string (2) enveloping the cable will be tightly closed after finalization and is for this purpose provided with a dismountable and reusable locking head (9c).

7. A method according to one of the claims 1 to 6, **characterized in that** for the technical realization in process step d) devices for mounting purposes are used inside a low point head-end station (30), wherein a low point closing device (25) is provided inside the low point head-end station (30), which closing device closes the flooded empty tube (1) that is under the pressure of the lifting medium (23) in an approximately tight manner.

8. A method according to one of the claims 1 to 7, **characterized in that** the low point closing device inside the low point head-end station (30) is designed as a removable mounting part, which is connected to the empty tube (1).

9. A method according to one of the claims 1 to 8, **characterized in that** the removable mounting part is designed as a multifunctional mounting flange tube (25).

10. A method according to one of the claims 1 to 9, **characterized in that** the low point closing device comprises at least one device (27) for passing through a traction device (9b), the device (27) being sealable against the pressure of the lifting medium (23).

11. A method according to one of the claims 1 to 10, **characterized in that** suitable existing empty tube systems will be used which meet the requirements of the further execution of a method according to one of the claims 1 to 10 for the active cooling of cables by means of gaseous or liquid cooling media, in which the cables are mounted or laid in a buoyancy-based manner.

## Revendications

1. Procédé de refroidissement actif de câbles par moyen d'agents de refroidissement gazeux ou liquides, dans lequel les câbles sont montés ou posés de manière basée sur la flotabilité, dans lequel
a) au moins un tube vide (1) est posé ou fourni, dont le diamètre intérieur (d1) est plus grand que le diamètre extérieur (d2) d'une conduite tubulaire de transport de charges utiles (2) ; et
b) au moins une station de tête de point haut (20, 20a) et au moins une station de tête de point bas (30) sont construites ou fournies dans la zone de la longueur du tube vide et de cette manière des accès à un système de tube vide sont créés ; et
c) au moins un système d'alimentation actif est fourni et au moins une conduite tubulaire de transport de charges utiles (2) est pré-montée à l'extérieur du tube vide (1), et et
d) la conduite tubulaire de transport de charges utiles (2) est introduite via la station de tête de point haut (20, 20a) à l'aide du système d'alimentation actif et est transportéé à l'intérieur du système de tube vide jusqu'à une station de tête de point bas (30) au lieu de destination et y est positionnée et à cette fin le système de tube vide est rempli d'au moins un médium de flotabilité primaire (23),
le diamètre extérieur (d2) de la conduite tubulaire de transport de charges utiles (2) étant adapté à la flotabilité (A) efficace nécessaire et désirée, qui agit dans le médium de flotabilité (23) ayant une densité connue sur la conduite tubulaire de transport de charges utiles (2) fermée à cette fin pour contrecarrer le poids respectif (G) de la conduite tubulaire de transport de charges utiles (2) au cours du transport et du positionnement de la conduite tubulaire de transport de charges utiles (2) à l'intérieur du système de tube vide,
et dans lequel
la conduite tubulaire de transport de charges utiles (2) remplit la fonction d'un tube porteur, dans lequel est logé le câble (3) à poser ou la charge utile à poser et ainsi un système de tubes de transport de charges utiles est créé, qui, s'il a ensuite été fermé de manière étanche, satisfait, sur la base de flotabilité, à l'exigence d'une pose à faible friction et à faible résistance dans le tube vide (1) rempli d'au moins un médium de flotabilité (23) ;
**caractérisé en ce que**
la densité du médium de flotabilité (23) peut être modifiée par moyen des additifs ou par remplacement et ainsi le comportement de flotabilité peut être changé aussi pendant l'étape de montage, et
dans lequel
le tube vide (1) et/ou la conduite tubulaire de transport de charges utiles (2) sont en outre prévus et utilisés pour l'utilisation comme tube porteur pour alimenter et décharger des agents réfrigérants aux fins d'un refroidissement actif.

2. Procédé selon la revendication 1, **caractérisé en ce que** pour améliorer le niveau de rendement, on utilise de la chaleur perdue, qui est notamment générée par la dissipation d'énergie en forme de pertes de distribution pendant le transport d'électricité.

3. Procédé selon la revendication 1 ou la revendication 2, **caractérisé en ce qu'**un tube de ballast (7) avec un tube de soufflage (11) est prévu pour alimenter les médias de ballast (10).

4. Procédé selon l'une des revendications 1 à 3, **caractérisé en ce que** dans l'étape de procédé c) la longueur prévue d'un câble (3) ou d'une charge utile est d'abord étalée ou composée à l'extérieur du tube vide (1) pour former la conduite tubulaire de transport de charges utiles (2) respective et qu'ensuite les tronçons de tube de transport sont enfilés un par un sur le câble (3) et ensuite les tronçons de tube de transport sont reliés l'un à l'autre de manière étanche.

5. Procédé selon l'une des revendications 1 à 4, **caractérisé en ce que** dans l'étape de procédé c) pour la fabrication de la conduite tubulaire de transport de charges utiles (2) respective, les dispositifs de fixation de câble ou les dispositifs de centrage de câble (7) sont aussi configurés comme des tubes de fixation de câble et des tubes de média (7) continus, qui sont appropriés de servir de tubes de ballast (7) pour recevoir un médium de ballast (10).

6. Procédé selon l'une des revendications 1 à 5, **caractérisé en ce que** la conduite tubulaire de transport de charges utiles (2) enveloppant le câble est fermée de manière étanche après finition et est munie à cette fin d'une tête de verrouillage (9c) démontable et réutilisable.

7. Procédé selon l'une des revendications 1 à 6, **caractérisé en ce que** pour la réalisation technique dans l'étape d) des dispositifs destinés au montage sont utilisés à l'intérieur d'une station de tête de point bas (30), un dispositif de fermeture de point bas (25) étant de préférence prévu à l'intérieur de la station de tête de point bas (30), lequel dispositif de fermeture ferme approximativement de manière étanche le tube vide (1), qui se trouve sous la pression du médium de flotabilité (23).

8. Procédé selon l'une des revendications 1 à 7, **caractérisé en ce que** le dispositif de fermeture de point bas à l'intérieur de la station de tête de point bas (30) est configuré comme une pièce de montage démontable, qui est reliée au tube vide (1).

9. Procédé selon l'une des revendications 1 à 8, **caractérisé en ce que** la pièce de montage démontable est configurée comme un tuyau à bride de montage multifonctionnel (25).

10. Procédé selon l'une des revendications 1 à 9, **caractérisé en ce que** le dispositif de fermeture de point bas comprend au moins un dispositif (27) pour le passage d'un dispositif de traction (9b), lequel dispositif (27) peut être rendu étanche contre la pression du médium de flotabilité (23).

11. Procédé selon l'une des revendications 1 à 10, **caractérisé en ce que** des systèmes de tube vide appropriés existants sont utilisés, qui remplissent les conditions pour l'exécution complémentaire d'un procédé selon l'une des revendications 1 à 10 pour le refroidissement actif de câbles par moyen des agents réfrigérants gazeux ou liquides, dans lequel les câbles sont montés ou posés de manière basée sur la flotabilité.
